# EUROPEAN PATENT SPECIFICATION

(11) **EP 2 655 083 B1**
(45) Date of publication and mention of the grant of the patent: **14.10.2015**
(21) Application number: 12855140.5
(22) Date of filing: 05.12.2012
(51) Int. Cl.: B44C 1/00, A47G 19/02, B44C 1/22, B41M 5/26, G09F 23/08, A47G 21/00, A47G 23/00

(54) **FOOD SERVICE ARTICLES BEARING DECORATIVE MARKINGS, IMAGES, AND/OR CUSTOM CONTENT AND METHOD THEREFOR**
LEBENSMITTELARTIKEL MIT DEKORATIVEN MARKIERUNGEN, BILDERN UND/ODER ANGEPASSTEN INHALTEN UND VERFAHREN DAFÜR
ARTICLES DE SERVICE ALIMENTAIRE PORTANT DES MARQUES, IMAGES ET/OU CONTENUS PERSONNALISÉS DÉCORATIFS ET PROCÉDÉ ASSOCIÉ

(30) Priority: 05.12.2011 US 201161566815 P
(43) Date of publication of application: 30.10.2013
(73) Proprietor: Waddington North America, Inc., Chelmsford, MA 01824 (US)
(72) Inventor: HEVERLY, Curtis, Glendale, California 91202 (US); MITHAL, Ashish K., Chelmsford, Massachusetts 01824 (US); EVANS, Michael G., Cincinnati, Ohio 45208 (US)
(74) Representative: Fritz, Edmund Lothar
(86) International application number: PCT/US2012/067903
(87) International publication number: WO 2013/085968

(56) References cited:
- EP-A1- 0 669 365
- EP-A2- 0 607 597
- WO-A1-01/23189
- WO-A1-2005/026247
- WO-A1-2007/098919
- WO-A1-2010/011227
- WO-A1-2010/089784
- JP-A- 2001 113 830
- JP-A- 2005 297 326
- KR-A- 20090 041 335

## Description

### FIELD OF THE INVENTION

This invention relates generally to food service articles having a decorative appearance. More particularly this invention relates to food service articles bearing a decorative mark, a pattern, an image, a photograph, a custom message, or other custom content on a surface thereof.

### BACKGROUND OF THE INVENTION

Disposable food service items such as containers, plates, trays, bowls, cups, and cutlery are in increasingly widespread use in all food related industries, including restaurants, caterers, institutional food service establishments, cafeterias, and households for storing, serving and consuming food, due to their reasonably low-cost and the convenience they provide. The increasing popularity of fast-food restaurant chains further fuels the demand for plastic tableware and takeout packaging. In addition to the fast food restaurants, caterers also prefer disposable food service items for the associated convenience, hygiene, and competitive-costs. Disposable food service items are also used at a variety of private, corporate and public functions and events.

Food service articles often feature decorative treatments applied to a surface thereof for a variety of reasons, including product identification, appearance enhancement, promotion, advertising, and/or providing instructions. The prior art yields a variety of methods for decorating plastic articles including printing, labeling, hot stamping, heat transfers, and metallizing.

Despite numerous printing and decorating technologies being available in the marketplace, there remain unmet and unrecognized needs.

In addition, there remains a natural need and demand for bridging the perception gap between disposable food service articles and their permanentware counterparts so that disposable items may offer both aesthetic appeal as well as functional equivalence. For instance, Waddington North America, Inc., the assignee of the present invention, sells a line of printed dinnerware plates under the Masterpiece™ brand name that simulates china plates, and, a line of cutlery articles under the Reflections™ brand name that simulates fine metal silverware. In addition to these WNA offerings, other companies offer dinnerware items such as plates and bowls that display a foil-stamped metallic appearance on the rims of the articles. These types of disposable food service products attempt to simulate their permanentware counterparts, and also offer the convenience of disposability, but may still not be perceived as equivalent to permanentware by some customers. Therefore, there is a need to further enhance the perception of value offered by upscale disposable products.

These and other needs are met by the system and method of the present invention.

### DEVELOPMENT OF THE INVENTION

Until the present invention, the chief objective of creating high-end disposable food service items was to provide a disposable product that simulated permanentware in appearance, and was functionally adequate for its intended use application. The inventors recognized, however, that to truly enhance the perception of value of disposable food service articles these products must offer something that their permanent counterparts cannot readily offer. This recognition led to the understanding that customizing a disposable food service article offers a novel approach to adding value to disposable products and distinguishing them over their permanentware counterparts. Permanentware items are usually purchased by consumers, caterers and restaurants for a plurality of uses, and therefore, customizing permanentware for a specific event or function would be inconsistent with their intended purpose. Since customized food service articles would be needed just for the specific event or occasion for which they were ordered, they would likely be discarded after use at the intended event or occasion. Accordingly, *customized disposable food service articles* offer a benefit that cannot be readily duplicated or at least economically attained with permanentware. Therefore, although the present invention can be implemented for decorating and customizing a variety of food service articles, it is particularly applicable to disposable single use food service articles.

The need for customizing and personalizing food service articles has hitherto not been recognized or addressed in the marketplace due to a lack of a comprehensive technique, system, and/or methodology. The inventors also recognized that the need for customizing food service articles has been mostly unaddressed because quantity requirements for occasional functions and events such as birthdays, anniversaries, weddings, and meetings, were expected to be fairly modest. While certain institutional customers might satisfy large quantity requirements for custom decorated products, the quantities of customized food service articles needed by most customers for their specific events or occasions would be limited to expected usage at such events.

In addition, it was expected that most custom orders would be unique, as customization may mean different things to different people, so that even returning customers of customized food service articles might not want the same customization that they previously ordered. Thus, prior to the present invention, personalization or customization of disposable food service articles had been economically infeasible or unviable for personal, family and social events such as birthdays, anniversaries, weddings, and meetings for the majority of customers because of short-run requirements for most such events, in contrast with long-run requirements for attaining reasonable pricing on disposable items decorated using traditional techniques.

Customization of items such as business cards, letterhead, certificates, and other flat paper items produced in small quantities is well known. However, there are several issues which render a similar approach impractical for food service items produced in small quantities. It would be useful to discuss the development of the invention in light of the prior art.

A common method of decorating food service articles is by printing an image, graphic or text on one or more surfaces of the articles, usually by offset printing, screen printing, or pad printing. It has been the experience of the inventors that manufacturers of food service articles and food processors generally print products in relatively large quantities that may exceed thousands of pieces, so that printing set-up and changeover costs can be distributed over the entire run for economic reasons. Therefore, in the prior art a lot of attention has been paid to maximizing the efficiency and speed of large printing operations geared towards the need of fulfilling sizeable orders from institutional customers. These efforts, however, do not address the needs of customers who may require shorter runs. In addition, shorter runs may be necessary for special and custom situations. Therefore, there is a need for commercially viable technologies and methods that will enable and facilitate decorating food service articles in smaller batches.

Traditional printing techniques, however, do not lend themselves to customizing food service articles because these processes require additional pre-press work once the artwork for printing has been created. Pre-press work may involve creating a master plate, a stencil, or a cliché and other preparatory work before even a single food service article can be printed.

Once pre-press work has been completed, food service articles can be printed on a commercial scale in relatively large quantities with these techniques. However, traditional printing techniques do not readily permit small quantities of customized or personalized content to be printed economically, due to the cost of the pre-press work required and other preparatory and changeover costs associated with switching from one printing pattern to another. Costs associated with a changeover from a first printing pattern to a second printing pattern include creation of an additional printing plate or cliché, ink clean-up, installation of the new printing plate, and other preparatory activities. Therefore, creating a unique or customized printing pattern for a customer, with traditional printing techniques inevitably requires minimum order quantities which can easily be tens of thousands of pieces for economic reasons. Otherwise, the customer would incur significant set-up and changeover expenses.

In addition, traditional printing processes suffer from other shortcomings when applied to food service items. Traditional printing techniques inevitably require the use of ink and handling ink related issues. Aspects of ink management include ensuring that selected inks are suitable for use on food service articles, that ink ingredients are deemed safe in toxicological evaluations, that the method offers adequate adhesion with substrate material, and that the inks are completely dried or cured. Accordingly, it is desirable for printing on food service articles that either the selection of inks is limited to ink types that will be suitable for food contact, or the printed image is protected from direct food contact with the ink by applying a barrier overcoat to guard against accidental migration of inks into food. While adequate ink adhesion would be normally required for printing a substrate material for use in any kind of application, it is particularly essential in food-service applications, because poor adhesion may lead to migration of inks into foods and cause food contamination and/or health hazards. Ensuring that the inks are completely dried or cured, and that any solvents are removed and/or reactants are neutralized, is critical to ensuring that the ink will remain adhered to the food service substrate, and will not become a food additive.

Thus, ink management practices frequently require the use of secondary processes which add to the cost and complexity of the operation. For instance, ensuring adequate adhesion may require subjecting a food service article to a corona treatment or flame treatment prior to printing thereon, in order to remove any surface compounds, processing aids, or other materials that may exude or bloom to the surface of plastic materials after molding or forming operations. In addition to the adhesion-promoting pretreatment, printing a food service article may require a post-treatment in the form of a barrier or protective overcoat. One of the disadvantages of using a barrier overcoat is that it detrimentally affects the vibrancy of the underlying print, but is required due to food contact reasons. It has been the experience of the inventors that a barrier overcoat on black or other dark colored food service plate surfaces significantly mars or impairs the appearance of the printed pattern or graphic, and the luster of the underlying dark color.

Another method of decorating plastic food-service articles is by transferring a pre-printed pattern onto the surface of an article. Once again, this method does not readily facilitate customization, because the pattern has to be printed onto the transfer medium using traditional printing techniques and then transferred onto the desired substrate via heat and pressure. Similarly, foil stamping does not provide a viable method for customizing food service articles because foil stamping still requires creation of a die for stamping a pattern onto the surface of a substrate. Foil-stamped plates are currently being sold in the marketplace with the purpose of emulating permanent ware. However, a shortcoming of this method is that the foil-stamped portions of the plate surface cause arcing in a microwave oven, and may create other electrical and fire hazards in use.

Thus, it can be firmly established that traditional printing and decorating techniques do not viably address customization of food service articles.

The above insights led the inventors to recognize that customization and personalization of food service articles for various events and occasions can serve as means for adding value to disposable food service items and distinguishing these products over their permanentware counterparts. However, the hurdles that remained to be overcome included overcoming the problems of prior art with respect to long-run requirements with traditional printing techniques, addressing the fact that even upscale disposable products that simulate permanentware cannot readily be customized with traditional printing techniques, addressing the lack of a technique for creating customized food service products in a reasonably price-effective manner without resorting to long runs, and addressing the lack of availability of a system to customers for customizing food service products for their personal events and occasions. Therefore, an object of the present invention is to overcome the hurdles identified above and the disadvantages of the prior art.

Thus, there is a need for facilitating customization of food service articles for events, functions and occasions via a decorating technique for plastic plates and other disposable food service articles which does not require long runs, and does not require the use of inks, foil stamps, heat transfers, metallic coatings, or labels. These and other needs are met by the food service articles and method of the present invention.

### BRIEF SUMMARY OF THE INVENTION

At the heart of the present invention is the discovery of an unexpected result, namely that the right combination of laser wavelength, laser power, plastic substrate, and colorant can yield a high contrast and aesthetically pleasing decoration for customizing disposable food service items and/or simulating permanentware articles without utilizing inks, foils or metallic coatings. The inventors had the insight that almost all conventional printing processes require transfer or placement of a printable pattern via direct contact between a master and a substrate, and this unavoidable aspect makes these techniques unsuitable for short run customization of food service products. In accordance with the present invention, a non-contact method for decorating food service articles by laser marking is used for customizing food service articles. This technique obviates the need for creating a master, a printing plate, a stencil or a cliché as is required in the prior art, and makes short runs viable, substantially removing key impediments to customization of food service articles. Laser marking does not involve the use of inks. Therefore ink-associated issues relating to ink toxicology, adhesion, curing, and clean-up are also avoided. In addition, any secondary processes to improve ink-adhesion are avoided, and the need for protecting ink via protective coatings or barrier layers is also obviated.

In the prior art, laser marking applications have mostly involved placing relatively small portions of alphanumeric information, such as date codes, serial numbers, batch numbers, part numbers, lot numbers, and machine readable UPC-type markings, on packaging or plastic substrates. US Pat. Pub. 2008/0124433 lists some of the examples of the use of laser marking in the food industry, including marking of two dimensional codes on eggs, date-code markings on plastic bottles, and marking of cheeses and fruits as a means of tracking, identification, promotion and advertising.

Documents EP 0 669 365 A1 and EP 0 607 597 A2 disclose laser marking methods, compositions for laser marking and mouldings thereof. Said methods are used for marking the maker's name, product name, date of production, etc. on the surfaces of various commercial products, for example, containers of foods.

Thus, while laser marking has been traditionally used in packaging applications for product identification, inventory and stock control, and product tracking purposes, it fundamentally involved placing functional markings which were not required to be prominently conspicuous, and did not provide a readymade way to decorate and customize food service articles. In particular, application of laser marking for decorating plastic food service articles, and specifically articles that are intended to simulate permanentware counterparts, was hitherto unknown. Furthermore, laser marking on surfaces that come in actual food contact, such as the top surface of a plate or a tray that also offers a decorative effect, was also unknown.

Pursuing laser marking technique(s) for decorating food service articles posed a number of challenges.

Firstly, while laser marking is functionally adequate for placing date codes, UPC codes, and other alphanumeric data on plastic products, decorating plastic plates and other articles requires that the marking be very conspicuous, attractive, and offer a distinctive visual appeal. For instance, achieving a relatively conspicuous mark on, for example, a plastic plate may be enough for coding purposes but may not provide a decorative effect that simulates a china plate which includes silver or gold colored patterning. Thus, a laser marked decorative pattern on a plastic plate must also offer the desired appearance, color contrast, and some degree of reflectivity for offering the impression of a china plate.

Secondly, decorating a relatively large surface of a food service article such as a plate may require a much longer marking time than simply marking text, which may render the technique uneconomical for decorating food service articles.

Thirdly, depending on the area of decoration, laser radiation may lead to overheating and melting of the plastic products, or produce a rough surface texture, causing an undesirable feel and a possibility that particulate matter from the marked region may separate from the plastic article and may contaminate foods. Thus, there was no reasonable expectation of success that a laser marked surface of a food service article would be aesthetically and functionally acceptable and would be suitable for food contact.

Fourthly, depending on the wavelength of the laser beam, the interaction between the laser beam and the plastic substrate produces different effects which may not be deemed attractive enough from a decorating standpoint.

Given these expectations and the problems outlined above, laser marking was not significantly explored before the present invention for decorating food service articles.

Other difficulties associated with decoration of plastics by laser marking included developing the correct match between the plastic substrate and the laser beam wavelength for optimizing absorptivity of laser radiation. When a light beam strikes the surface of an object it can interact in the following ways: some of it is reflected from the object, some of it may be absorbed by the object, and the rest is transmitted through the object. Therefore, if the laser radiation is substantially reflected by or transmitted through the plastic substrate, then there will be very little interaction between the laser beam and the plastic substrate, and hence the markings will be relatively weak, i.e. lacking sufficient contrast.

Thus, in order to achieve a visible laser mark on the surface of a plastic article, there must be some degree of absorption of the laser energy by the plastic material. The difficulty this posed is that most of the plastics used for food service articles are naturally transparent or translucent, and even non-clear food service articles are produced by adding just the requisite amount of colorant for achieving the desired appearance. Various approaches for enhancing the absorptivity of laser radiation for achieving a distinct mark are described in the art. One approach is to coat the article with a material that will readily change color upon exposure to laser light. However, this requires a more complex manufacturing process, and can significantly increase the cost of a food service article such as a plastic plate. In addition, toxicity of the coating material can be a safety concern, if there is any chance that the adhesion of the coating may be less than perfect. For example, US Pat. Pub. 2008/0131563 describes a food-compatible laser-imageable coating and indicates that many laser-imageable coating components are not food-compatible.

Another approach for enhancing laser absorptivity is to add a secondary laser-absorbent substance or pigment to the plastic itself, and a variety of pigment compositions are described in the prior art. Laser marking pigments are also available commercially; for example, Eckart America Corporation sells a laser marking additive under the brand name LASERSAFE. It is well known that plastic products are normally produced in a desired color by incorporating colorants or dyes during molding or forming operations. However, including a secondary laser-absorbing pigment or additive may significantly increase the cost of the article, and may adversely affect the appearance or color of the article.

In experiments, the inventors also witnessed that food service articles out-gassed during laser marking and left fine particulate deposits on surfaces thereof. Fine particulate matter was very noticeable at certain process settings, despite the fact that a vacuum exhaust for removing process fumes was operational during laser marking. This was of particular concern as any visible residue on a food service article, such as a plate, would be very unsightly and make it unfit for use in food contact applications.

The present invention addresses the above challenges; and *inter alia* teaches a plastic food service article that is decorated by laser marking. The food service article is made from a thermoplastic resin, such as polystyrene, polypropylene, polyethylene, polyethylene terephthalate, etc., and is tinted by adding a colorant to the plastic, such as a dye or pigment, so as to impart a desired color or appearance to the final article. A variety of colorants can be used in food service articles for obtaining a variety of colors. Many or most of them can be used in the present invention. For example, white food service articles that employ titanium dioxide as a colorant, and black food service articles that employ carbon black as a colorant are compatible with the present invention. The laser marking process itself does not involve the use of inks on the article.

In exemplary embodiments of the invention, no special laser absorptive substances are added to the plastic products other than customary tints or colorants which may be included for imparting a desired color or appearance to the plastic article. In some exemplary embodiments, laser marking is provided on surfaces that come in actual contact with food, such as the top surface of a plate or tray. In some embodiments, deposition of fine particulate during marking was controlled by blowing ionized air onto the surface of the part to eliminate static and assist in the escape of gaseous and particulate matter through the exhaust.

The method of decorating food service articles according to the invention includes exposing a surface of the article to a high intensity laser beam, produced in some embodiments by a YAG laser or a Fiber laser, the beam exposure causing localized surface absorption of the laser radiation by the colored plastic substrate and consequent heating of the plastic sufficient to cause localized surface foaming or discoloration of the plastic in a precisely defined region that is distinguishable from both light and dark backgrounds. It will be apparent that various laser types can be utilized for accomplishing the objects of the invention including lasers that operate at wavelengths in the ultraviolet region (e.g. 355 nanometers UV laser); visible region (e.g. 532 nanometers Green laser); and infrared region (e.g. lasers operating at 1062 nanometers, or 1064 nanometers, or 1070 nanometers).

The inventors have observed that lasers operating in the far infrared region (CO₂ lasers operating at 10.6 microns) do not provide a high color contrast, but simply engrave the surface of the plastic. CO₂ lasers have been tried in the past for marking lids, but have not been commercialized in the marketplace, perhaps due to lack of contrast and quality of marking.

In certain embodiments of the invention, the food service articles can be molded from plastic resins such as general-purpose polystyrene, high-impact polystyrene, polyethylene, polypropylene, polyethylene terephthalate (PET), polylactic acid (PLA), styrene acrylonitrile (SAN), acrylonitrile-butadiene-styrene (ABS), styrene-butadiene-copolymer (SBC), poly(methyl methacrylate) (PMMA), polycarbonate or a mixture and/or a copolymer thereof. In various embodiments, the laser intensity and beam deflection are controlled by a computer so as to produce a pattern defined by software instructions.

In some embodiments and design variants, the laser marking operation requires between 0.5 seconds and about 5 seconds for decorating an entire tableware article such as a plate or cup. Nonetheless, extremely intricate artwork and high resolution photographs may require 30 to 90 seconds or even longer in terms of marking time on a 25.4 cm (10") plate. It will be appreciated by skilled artisans that marking times can be influenced by a variety of factors, including the speed of marking, the size and quality of the graphic artwork, the level of detail and intricacy of the graphic artwork, the resolution used for marking, and the absorptive properties of the plastic-colorant combination.

One of the benefits of decorating by laser marking is that the decoration is applied in a non-contact manner without distorting or deforming the article or any portion thereof, thereby allowing decoration to be applied or scribed over various surfaces of an article, including non-planar surfaces and three-dimensional features. Accordingly, a feature of the present invention is to provide a method for decorating a food-service article that includes a plurality of surfaces comprising at least one of a flat surface, a single curvature surface, a concave surface, a dual curvature surface, and a multi curvature surface. For example, a plate having a molded-in pattern in the form of flutes, scallops, or a similarly ornate pattern can be laser-marked without undue distortion of either the mark or the plate itself.

Another feature of the present invention is that a display graphic can be placed on a complex surface without undue manipulation of the artwork.

An additional feature of the present invention is to provide a method for applying custom decorations to food-service articles for a variety of events and functions, including birthdays, weddings, anniversaries, sports events, corporate gatherings, and such like, in relatively low quantities at a reasonable cost.

One general aspect of the present invention is a decorated plastic food service article that includes a food service article made of a colorant-containing plastic material that undergoes local heating when irradiated with a laser beam, and a visible marking pattern formed on a surface of the food service article by exposure to said laser beam, causing said local heating and thereby local discoloration of said surface of the food service article, where said visible marking pattern have an appearance on said food service article that simulates application of a metal or of ink, without utilizing metallic coatings or inks on said food service article.

In embodiments, the plastic material is one of general-purpose polystyrene, high-impact polystyrene, polypropylene, polyethylene, polycarbonate, PET, PLA, ABS, SAN, PMMA, and SBC.

In some embodiments, the plastic material comprises at least one of general-purpose polystyrene, high-impact polystyrene, polyethylene, polypropylene, polycarbonate, PET, PLA, ABS, SAN, PMMA, and SBC.

In other embodiments, the plastic material is a blend of a first plastic material and a second plastic material, and wherein said first plastic material has a higher laser absorptivity than said second plastic material.

In further embodiments the plastic material is colored to resemble china dinnerware. In some embodiments said visible marking pattern on said surface of the food service article is difficult to detect by touch. And in other embodiments said visible marking pattern on said surface of the food service article provides a gold appearance.

In various embodiments said visible marking pattern on said surface of the food service article provides a silver appearance. And in certain embodiments said visible marking pattern on said surface of the food service article provides a pewter appearance.

In embodiments, said visible marking pattern on said surface of the food service article provides a white appearance. In some embodiments said visible marking pattern on said surface of the food service article provides at least one of a gold look, a pewter look, and a silver look.

In other embodiments said surface of said food service article is non-planar. And in various embodiments said visible marking pattern is applied to a portion of the food service article comprising at least one of a flat surface, a non-planar surface, a single curvature surface, a multi-curvature surface, a fluted region, and a scalloped surface.

In some embodiments said food service article is injection molded. In other embodiments said food service article is thermoformed.

In certain embodiments said laser beam is emitted by a Fiber laser. In some embodiments said laser beam operates at 1062 nanometers. And in other embodiments said laser beam operates at 1064 nanometers.

In various embodiments said exposure to said laser beam is under 10 seconds. And in certain embodiments said food service article is a cutlery item.

Another general aspect of the present invention is a method for decorating a plastic foodservice article, where the method includes providing a plastic foodservice article made of a colorant-containing plastic material that is discolored when locally heated, exposing a surface of the article to a laser beam, the beam having sufficient intensity to cause localized discoloration of plastic on the surface, and controlling the location of the beam using a software-controlled beam director, thereby forming a marking pattern on the surface of the food service article that provides the appearance of a permanentware article; said marking pattern being characterized by its suitability for food contact.

In some embodiments, the laser beam is produced by a YAG laser. In other embodiments the laser beam is produced by a Fiber laser.

In embodiments, the plastic material is one of general-purpose polystyrene, high-impact polystyrene, polypropylene, polycarbonate, ABS, SAN, PMMA, and SBC.

In various embodiments the plastic material is at least one of general-purpose polystyrene, high-impact polystyrene, polypropylene, polyethylene, polycarbonate, acrylonitrile-butadiene-styrene (ABS), SAN, PMMA, and styrenebutadiene-copolymer (SBC).

In certain embodiments the plastic includes at least one of general-purpose polystyrene, high-impact polystyrene, polypropylene, polyethylene, polycarbonate, acrylonitrile-butadiene-styrene (ABS), SAN, PMMA, styrenebutadiene-copolymer (SBC) and a copolymer thereof.

In some embodiments the plastic food service article is a plate. In various embodiments the plastic is tinted to resemble china dinnerware.

In other embodiments the localized discoloration of plastic on the surface is difficult to detect by touch. And in certain embodiments the discoloration on the surface provides an appearance similar to a metal.

In various embodiments, at least a portion of the marking pattern is applied to a region of the food service article that is not flat.

In certain embodiments the marking pattern can be changed by providing appropriate software instructions to the beam director. Some of these embodiments further include an automated delivery and removal system for automated decoration of a plurality of plastic food service articles. And in some of these embodiments the marking pattern can be changed as frequently as every article during the automated decoration.

In various embodiments at least one of a focus of the laser beam and an intensity of the laser beam is controlled by the software.

Yet another general aspect of the present invention is a decorated plastic cutlery article which includes a cutlery article made from at least a colorant and a plastic material and having a display surface and an underside, wherein said cutlery article undergoes local heating when irradiated with a laser beam, and a visible marking pattern formed on at least a portion of the display surface of the cutlery article by exposure to said laser beam, said laser beam causing said local heating and a local discoloration on said portion of said display surface, where said visible marking pattern having an appearance on said cutlery article that simulates application of a metal or of ink, without utilizing said metal or said ink on said cutlery article.

Still other features and advantages of the present invention will become readily apparent to those skilled in this art from the following detailed description, wherein we have shown and described only a few embodiments of the invention, simply by way of illustration contemplated by us in carrying out this invention. As will be realized, the invention is capable of other and different embodiments, and its several details are capable of modifications in various respects, all without departing from the scope of the invention.

The features and advantages described herein are not all-inclusive and, in particular, many additional features and advantages will be apparent to one of ordinary skill in the art in view of the drawings, specification, and examples of claims. Moreover, it should be noted that the language used in the specification has been principally selected for readability and instructional purposes, and not to limit the scope of the inventive subject matter.

### BRIEF DESCRIPTION OF THE DRAWINGS

The invention will be better understood upon reading the following Detailed Description in conjunction with the drawings, in which:
Figure 1 is a flow diagram illustrating the method of marking a food service item in an embodiment of the present invention;
Figure 2 is a photograph of a white plastic plate with silver-appearing decorative markings made using an embodiment of the present invention;
Figure 3 is a photograph of a white plastic bowl with silver-appearing decorative markings made using an embodiment of the present invention;
Figure 4 is a photograph of a white plastic bowl with a fluted flange showing silver-appearing decorative markings made using an embodiment of the present invention;
Figure 5 is a photograph of a white plastic platter with silver-appearing decorative markings made using an embodiment of the present invention;
Figure 6 is a photograph of a black plastic plate with gold-appearing decorative markings in the form of circular bands made using an embodiment of the present invention;
Figures 7-8 are photographs of black plastic plates with complex, gold-appearing decorative markings made using an embodiment of the present invention;
Figure 9 is a photograph of a black plastic plate with fluted shaping having complex, gold-appearing decorative markings made using an embodiment of the present invention;
Figure 10 is a photograph of a black plastic platter with complex, gold-appearing decorative markings made using an embodiment of the present invention;
Figure 11 is a photograph of a black plastic oval tray with fluted shaping having complex, gold-appearing decorative markings made using an embodiment of the present invention;
Figure 12 is a photograph of a white plastic plate having a corporate logo and slogans imprinted thereupon using an embodiment of the present invention;
Figures 13-17 are photographs of black plastic plates having corporate logos and slogans imprinted thereupon using an embodiment of the present invention;
Figures 18-20 are photographs of white plastic plates having photographs imprinted thereupon using an embodiment of the present invention;
Figure 21 is a photograph of a white plastic plate having a photograph, text, and decorative markings imprinted thereupon using an embodiment of the present invention;
Figure 22 is a photograph of a black plastic plate having a photograph imprinted thereupon using an embodiment of the present invention;
Figures 23-24 are photographs of black plastic plates having photographs, text, and decorative markings imprinted thereupon using an embodiment of the present invention;
Figure 25 is a photograph of a white plastic plate with a customization message and a greeting according to an embodiment of the invention;
Figure 26 is a photograph of a black plastic plate showing a birthday theme decoration according to an embodiment of the invention;
Figure 27 is a photograph of a white plastic plate showing a wedding theme custom decoration according to an embodiment of the invention;
Figure 28 is a photograph showing assorted cutlery handles displaying ornate decorations thereon according to an embodiment of the invention.
Figure 29 is a pictorial representation of a cutlery line featuring a fork, spoon and knife with handles decorated according to an embodiment of the invention.
Figures 30A and B are photographs showing a serving spoon with a decorated handle according to an embodiment of the invention along with an enlarged view of the customized handle; and
Figure 31 is a photograph of a thermoformed plate decorated according to an embodiment of the invention.

### DETAILED DESCRIPTION OF THE INVENTION

The present invention is generally directed towards a decorated food service article and a method for decorating or otherwise visually enhancing a food service article such as a plate, a tray, a cup, or a cutlery item by laser marking. The following description of one or more embodiments, in conjunction with the accompanying drawings of laser-marked articles, is offered as illustrative of the invention, but should not to be regarded as restricting the scope of the invention.

As mentioned in the preceding sections, traditional printing processes suffer from many disadvantages that make running short and/or custom batches of food service articles either infeasible or economically unviable. A non-contact method such as laser-marking provided the promise of overcoming some of the difficulties of traditional printing processes, but prior art laser marking methods offered their own challenges, and did not provide a readymade way to decorate and customize food service articles. Accordingly, the following description of exemplary embodiment(s) particularly relates to laser marked food service articles that are intended to simulate their permanentware counterparts.

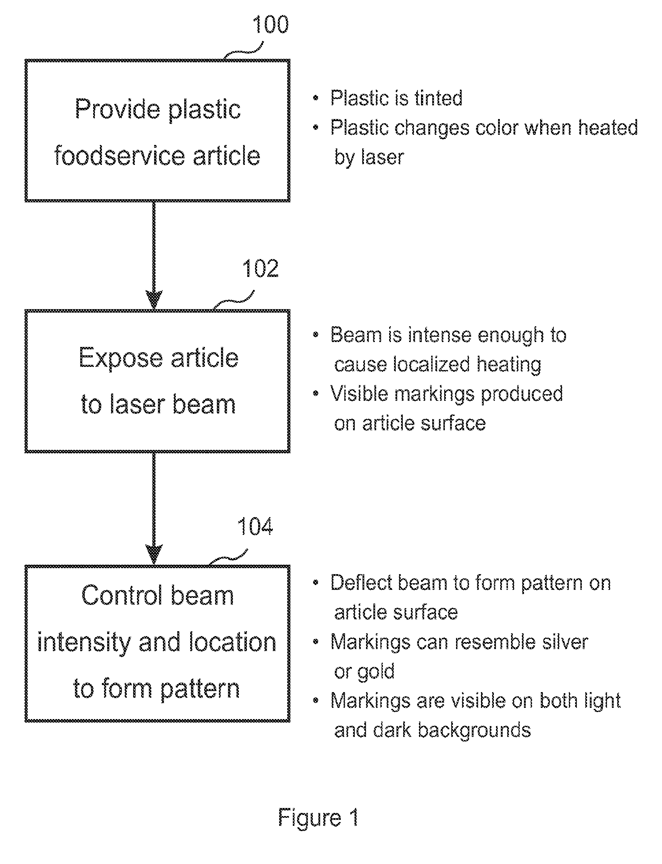

With reference to Figure 1, the method of the present invention includes providing a plastic food service item 100 made from a colored plastic that exhibits a localized change in color when exposed to laser radiation. The food service article can be either injection molded or thermoformed. Suitable plastic materials for forming or molding the food service articles may include polystyrene, polypropylene, polyethylene, polycarbonate, PET, PLA, ABS, SBC, SAN, PMMA, or a copolymer thereof, or a blend of two or more of the above resins or copolymers. The plastic is tinted with a colorant, pigment or dye typically used for coloring plastic; for example, the colorant can be a titanium dioxide colorant for white products, or a carbon black colorant for black products. In embodiments, the colorant is selected to provide the appearance of china or another permanentware ceramic. In some embodiments, the food service article is free of any surface coatings, and laser markings are formed directly on the surface of the food service article. For white and light colored food service articles the loading of the colorant in the plastic material is adjusted to provide an optical density of the colored plastic food service articles to be at least 1.0, and preferably greater than 1.2, for ensuring fast interaction with the laser beam. Higher optical densities allow the same marking intensity to be achieved at faster marking times. The inventors have obtained acceptable marking results on white plates with titanium dioxide pigment loading in the range of 2.5% to 5% by weight when using a laser marking system operating at 1062 nanometers and nominal power of 50 watts. It was found, that the black articles exhibit much higher optical densities (greater than 3.0) even at 1% to 2% colorant loading. While higher colorant loadings may favorably impact marking speed or reduce marking time, they also tend to increase the overall cost of the article due to increased usage of the colorant in the plastic resin. The costs of the article can be optimized by establishing and experimenting with acceptable ranges of marking times and colorant loadings.

Having provided an appropriate plastic food service item, the item is exposed to a laser beam 102, which causes localized heating that results in visible markings produced on the surface of the article.

In embodiments, a YAG, a YLP, or a Fiber laser operating at a wavelength between 1060-1070 nanometers and preferably at 1062 nanometers or 1064 nanometers, is used for accomplishing the objects of this invention. Laser beams can be generated by supplying energy through a lamp or a diode. As is known in the art, the laser beam from the marking unit is guided or steered by a pair of mirrors through an optical lens which focuses the beam onto the plastic surface. Decorative markings and images can then be applied to the plastic foodservice article by appropriate deflection of the laser beam and modulation of its power. Different lenses can provide different spot size for the incident beam. If the spot size is too wide, then the laser energy will be distributed over a larger area, and the intensity of marking or contrast may be feeble. If the spot size is too small, the line thickness may be too thin for sufficient visual impact. Larger lenses provide larger spot sizes but also cover a larger area. Therefore, spot size must be reasonably large for achieving the optimum marking effect. According to certain embodiments of the invention, spot sizes in the range of 100 to 200 microns (0.1 to 0.2 mm) are deemed appropriate. The inventors have found that certain plastic materials such as PLA perform better or provide high contrast markings at smaller spot size compared to polystyrene, polypropylene, polyethylene and PET.

To achieve optimal marking effect within the shortest time period for reasons of cost and expediency, the incident laser beam hitting the surface of the food service article must be focused; therefore, the food service article must be placed at the right focal distance from the lens.

The food service article is exposed to a laser beam 102 having sufficient power such that absorption by the plastic-colorant combination causes localized heating of the surface at the laser impact location, where the localized heating is sufficient to cause localized foaming and/or discoloration of the surface of the plastic article. The optimal laser power and exposure time will depend on the type of plastic used and on the type and amount of colorant included in the plastic. For each type of plastic and colorant, the optimal laser power and exposure time can readily be determined by applying different laser powers and exposure times to a sample of the plastic and noting a range of parameters for preventing excessive melting, charring or vaporization of the plastic substrate. Optimal exposure conditions will produce visible and well contrasted markings on both light-colored and dark-colored plastics. By manipulating various equipment variables, including laser power, marking speed, and resolution, surface roughness and texture of the decorated area can be controlled for achieving the desired visual appearance. It will be realized by those skilled in the art that the laser beam in most commercial marking system is not continuous but pulsed rapidly at frequencies that can be as high as 80 kHz or 80,000 times per second.

In embodiments, application of a complete decorative pattern or image (as are illustrated in the figures) requires between a half-second and a few seconds. The beam deflection is controlled by a computer or other software-driven processor (step 104). If a series of plastic articles are decorated, it is therefore easy to transition between different decorations as often as every article, by simply providing appropriate instructions to the processor. One of the advantages of laser marking is that digital control of the marked pattern facilitates customization of food service articles, and decorative patterns can be changed quickly compared to, for example, offset printing - a typical prior art method of printing these articles that is only practical for printing a non-varying decorative pattern on a relatively large number of articles for economic reasons. In some embodiments, two or more patterns can be sequenced in a continuous loop for creating an assorted batch of decorated food service articles.

As will become readily apparent from the description herein, a plastic food-service item that can be readily laser-decorated according to the present invention provides several advantages over prior methods for decorating food-service items, some of which are discussed above.

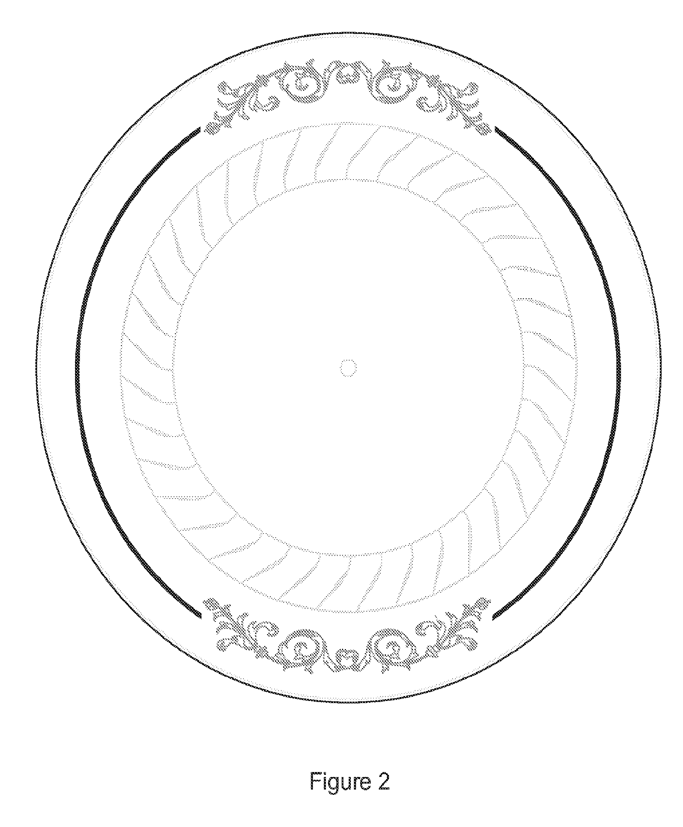

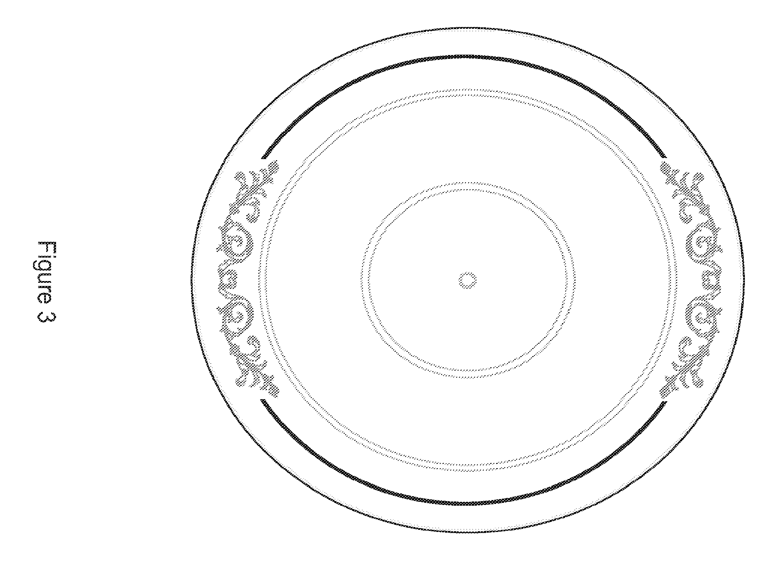

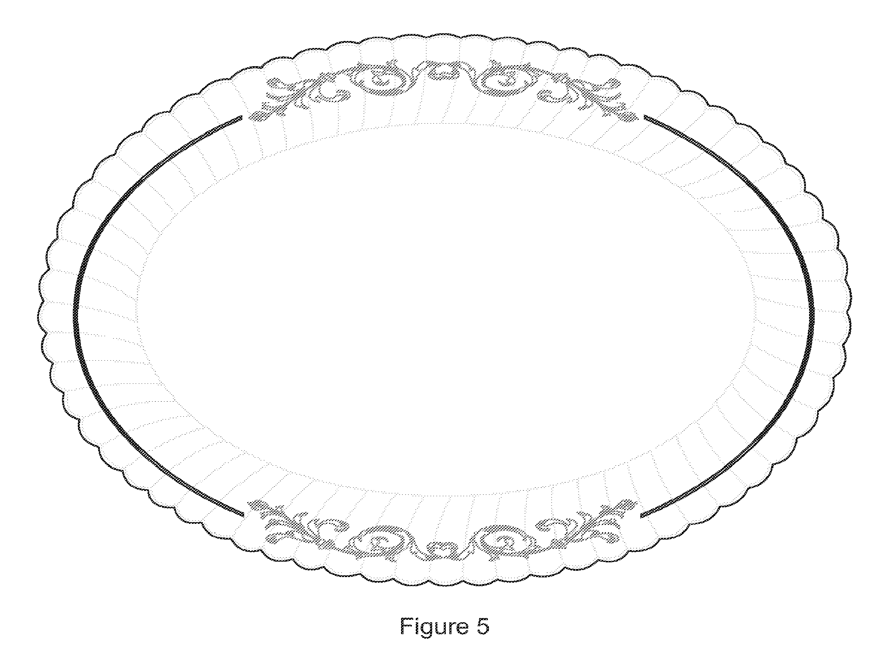

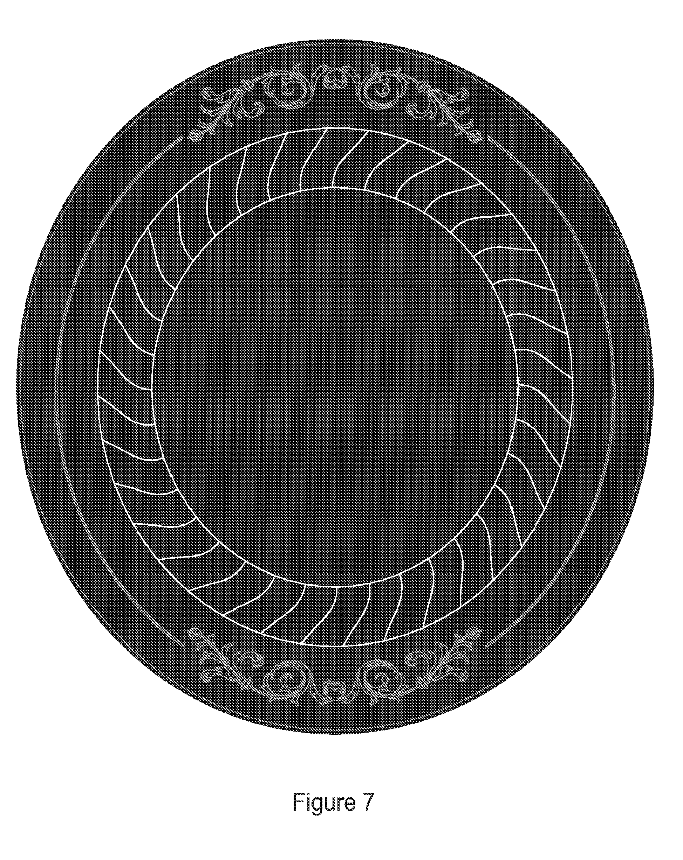

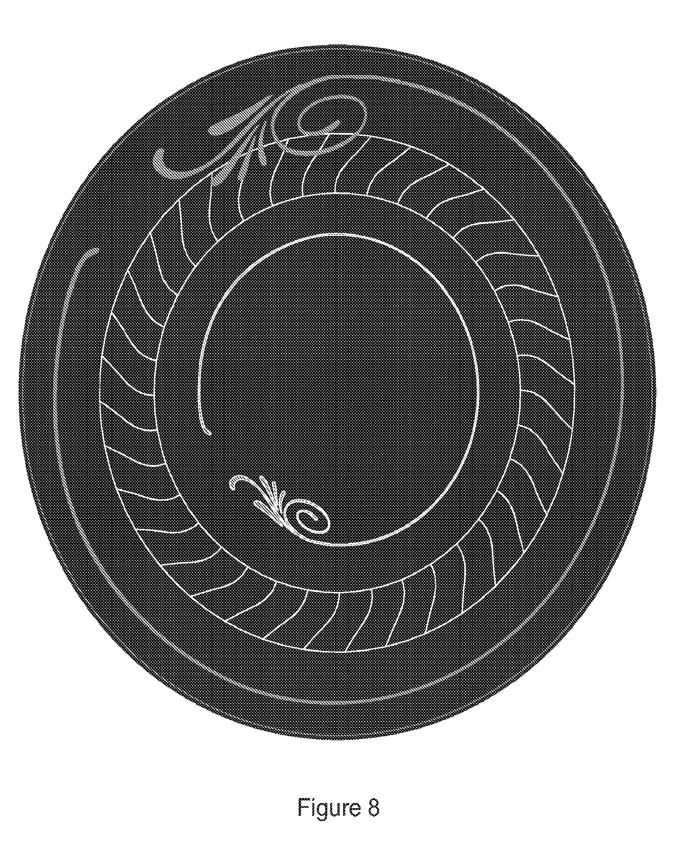

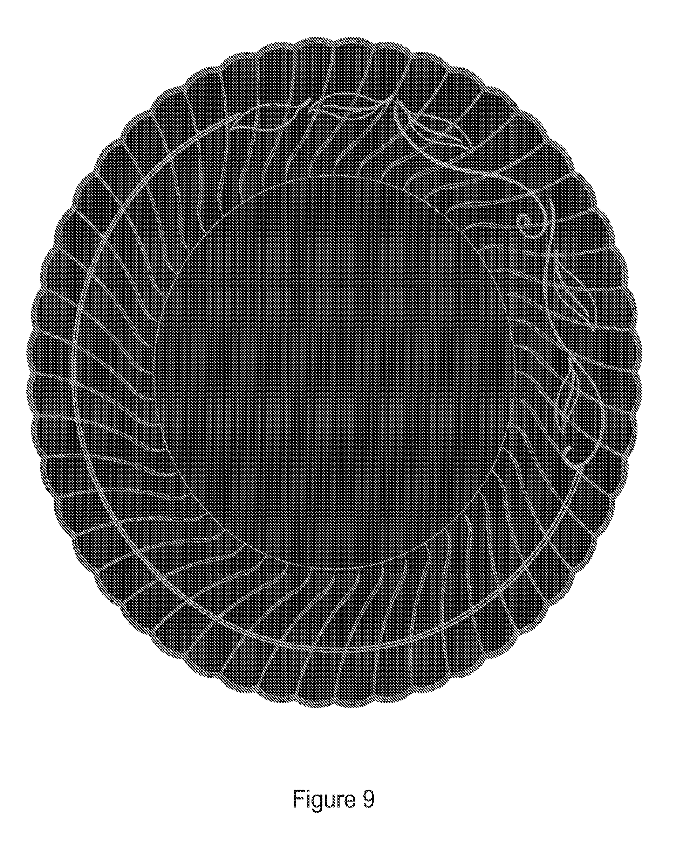

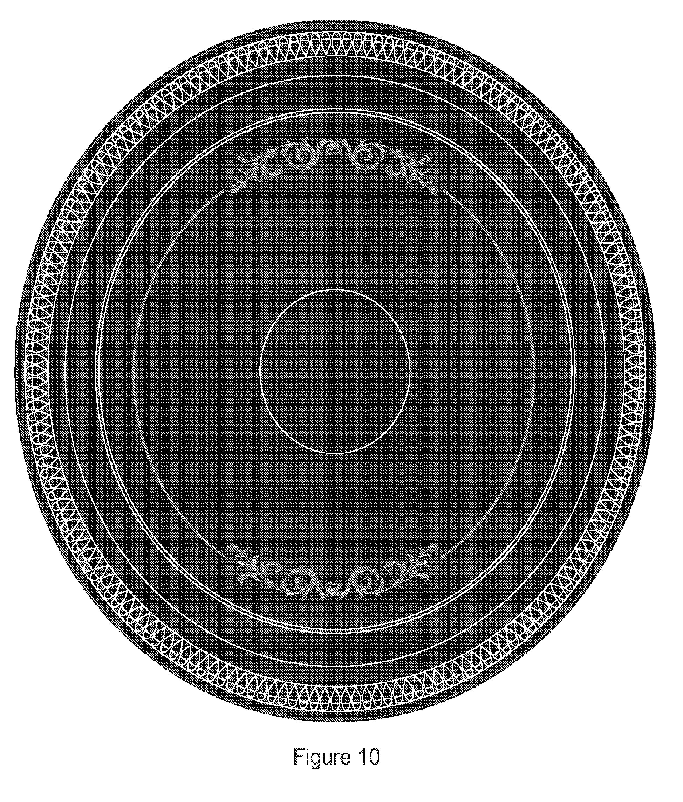

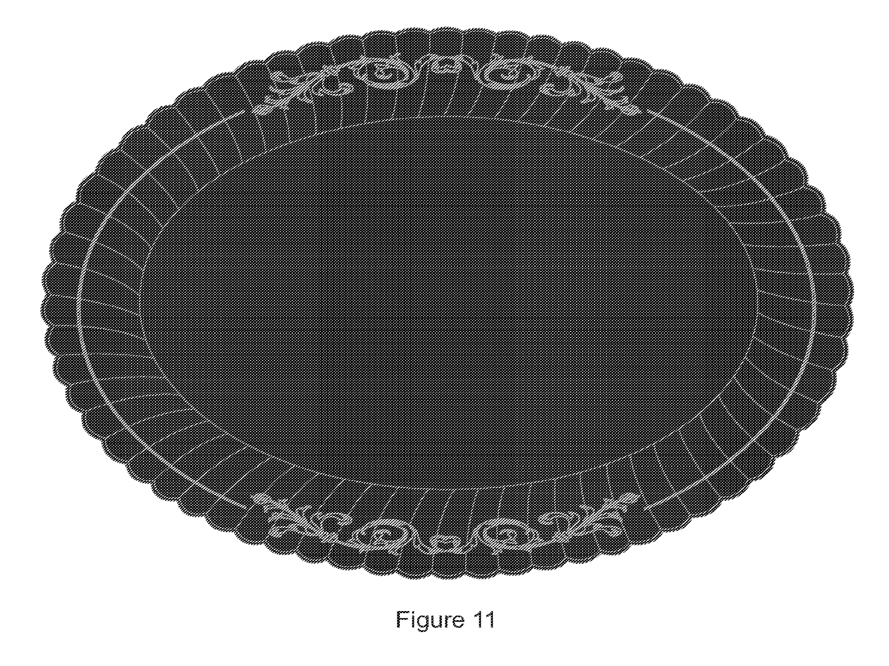

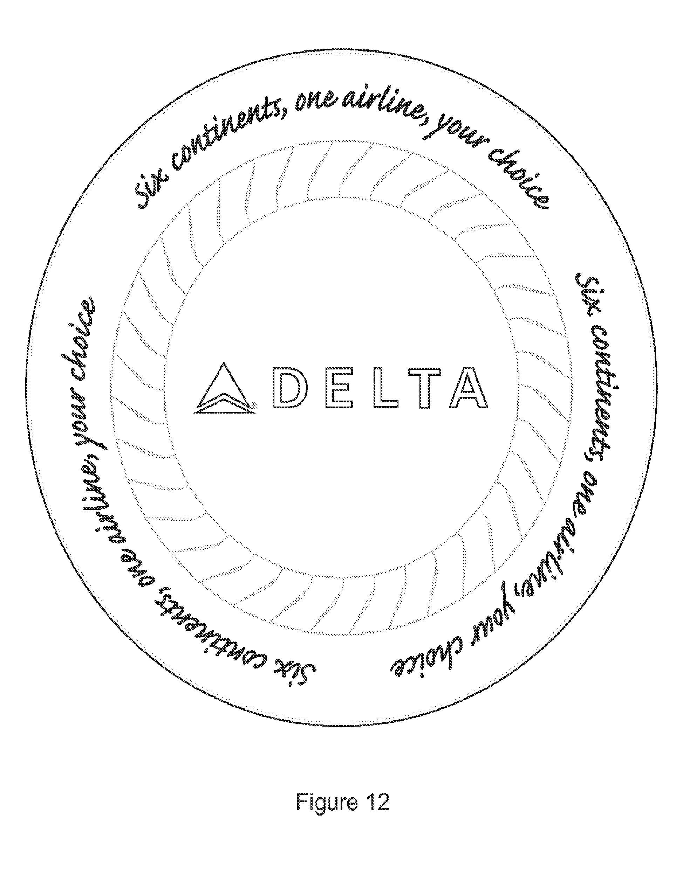

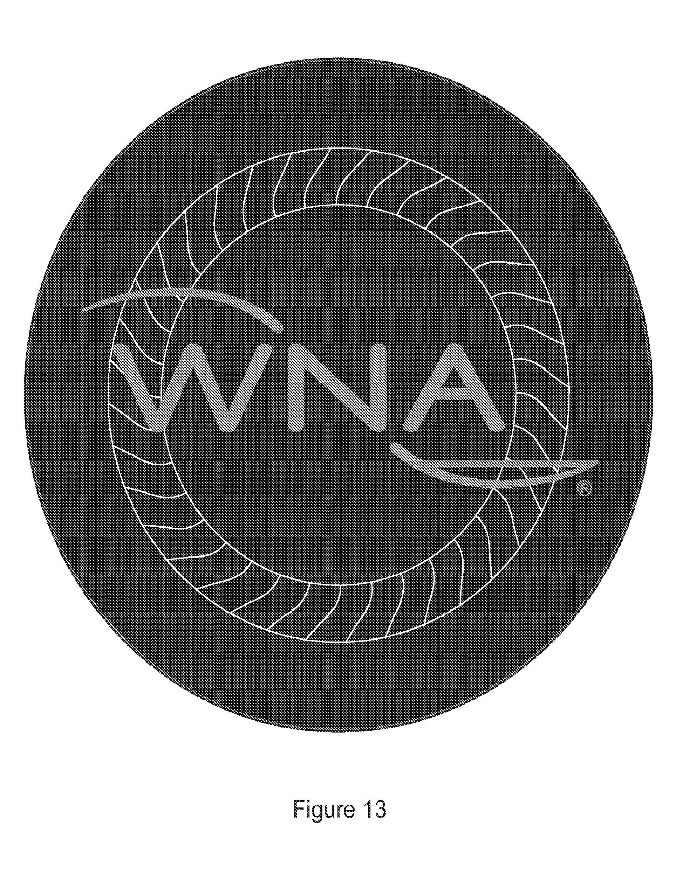

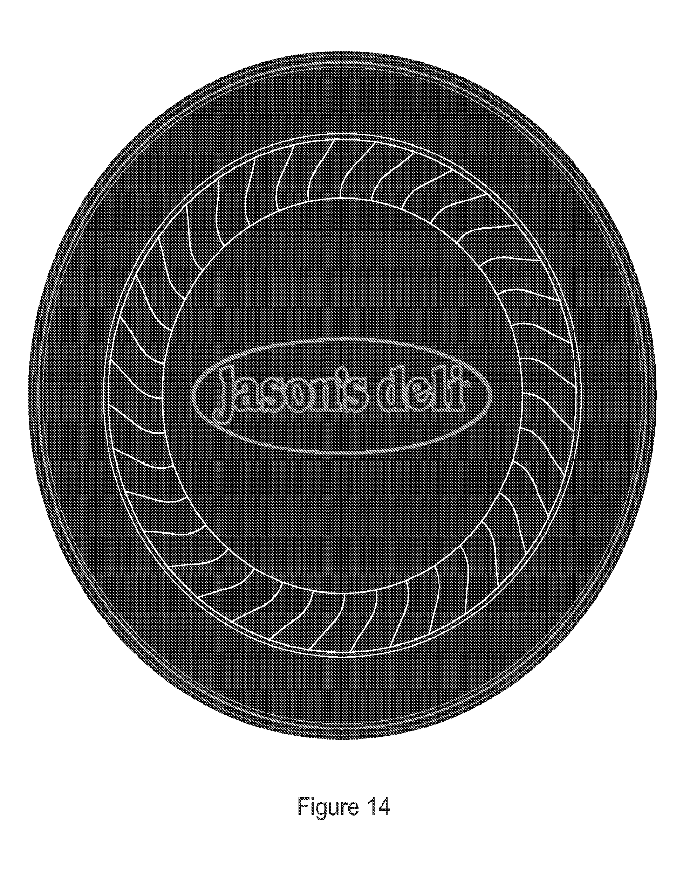

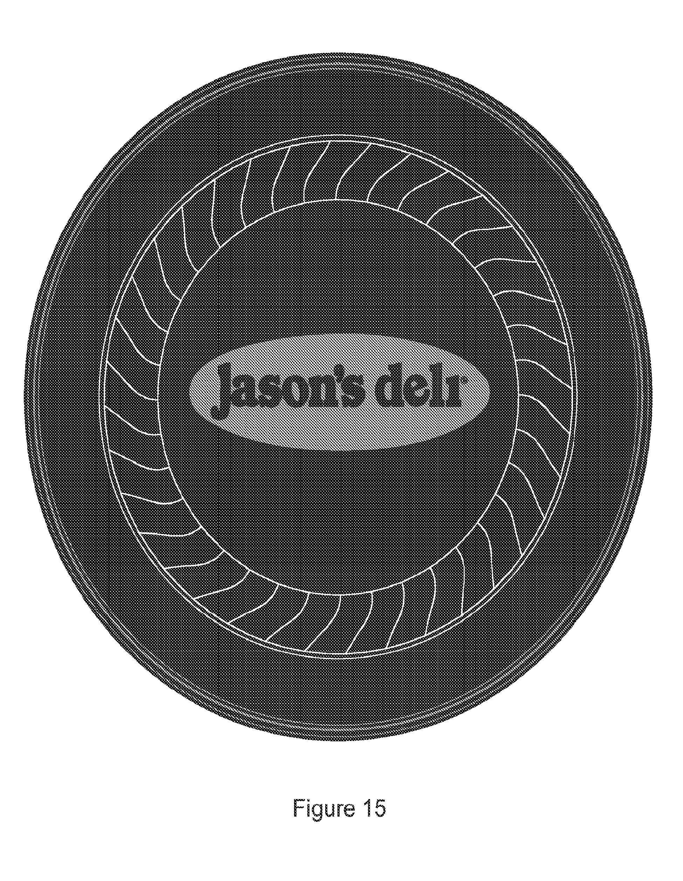

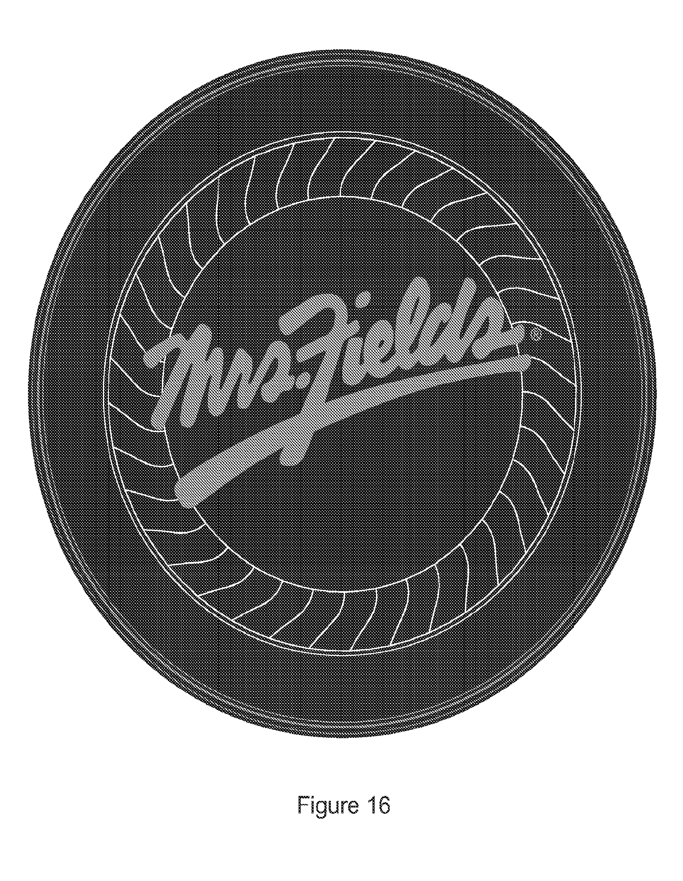

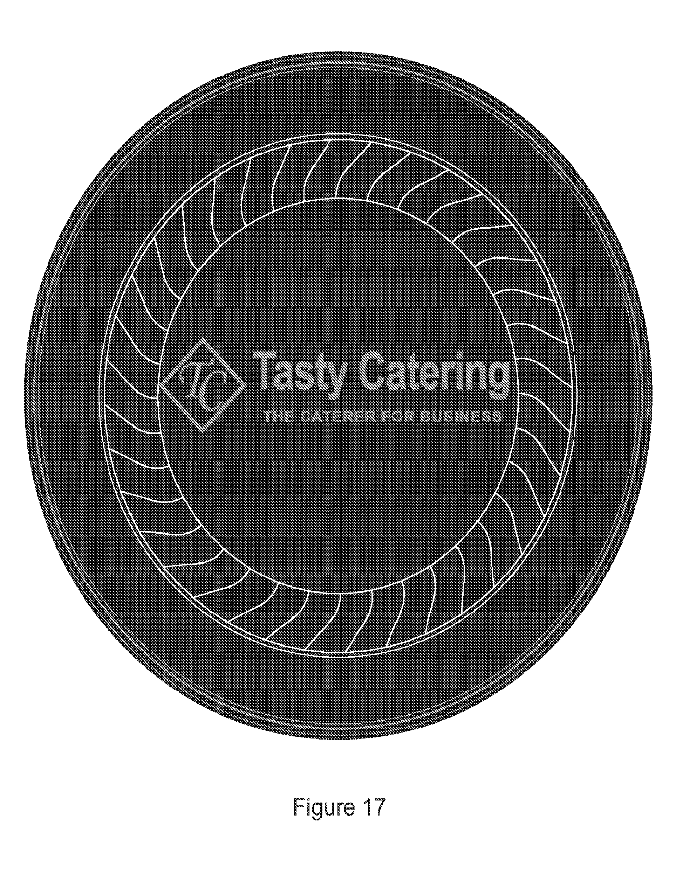

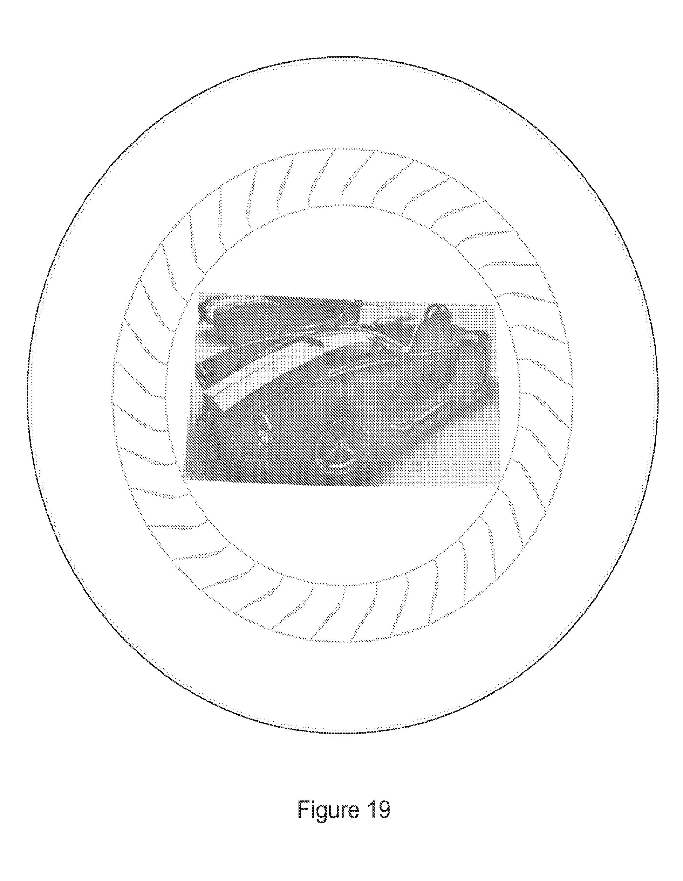

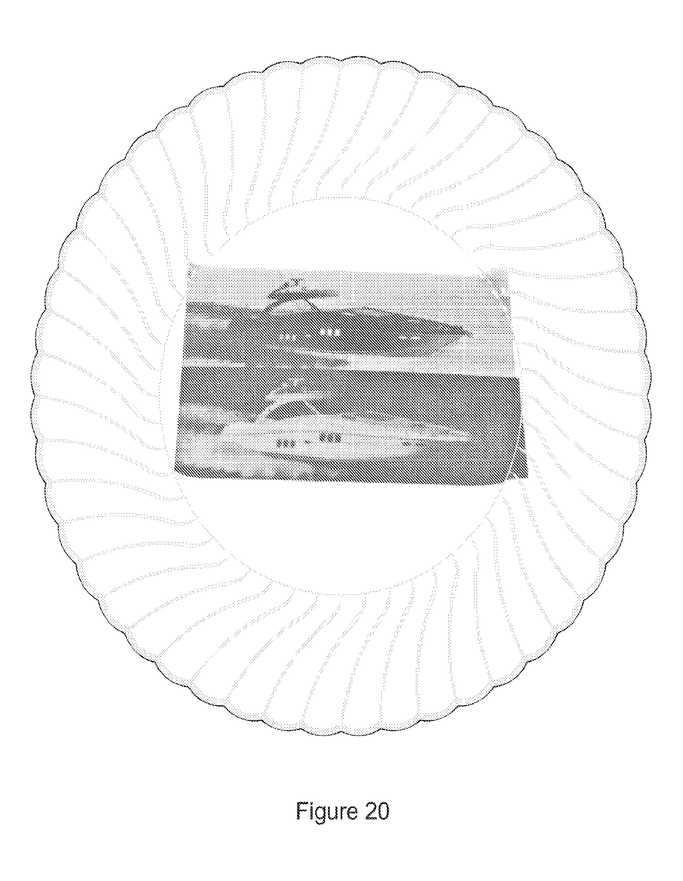

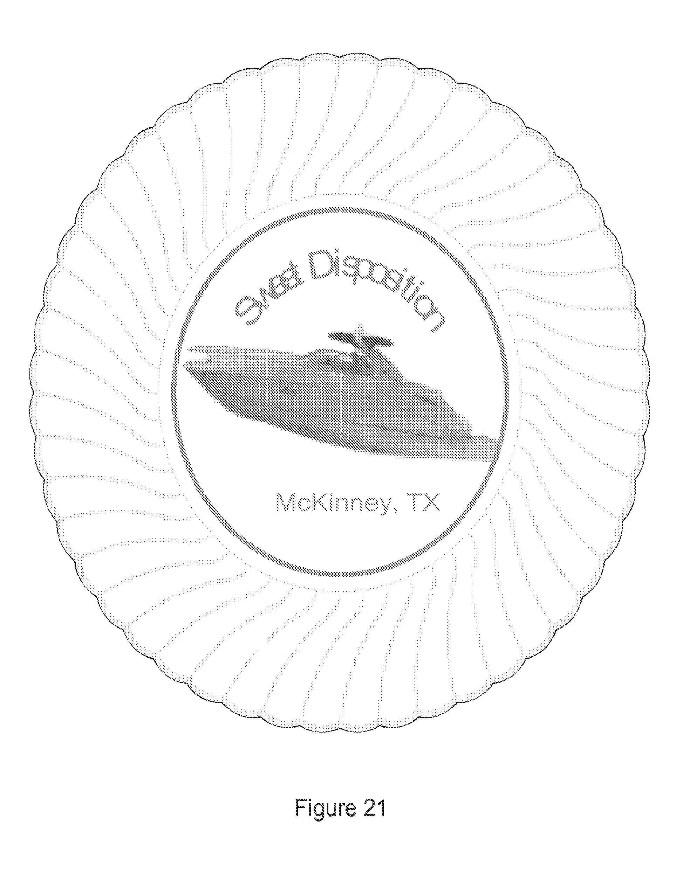

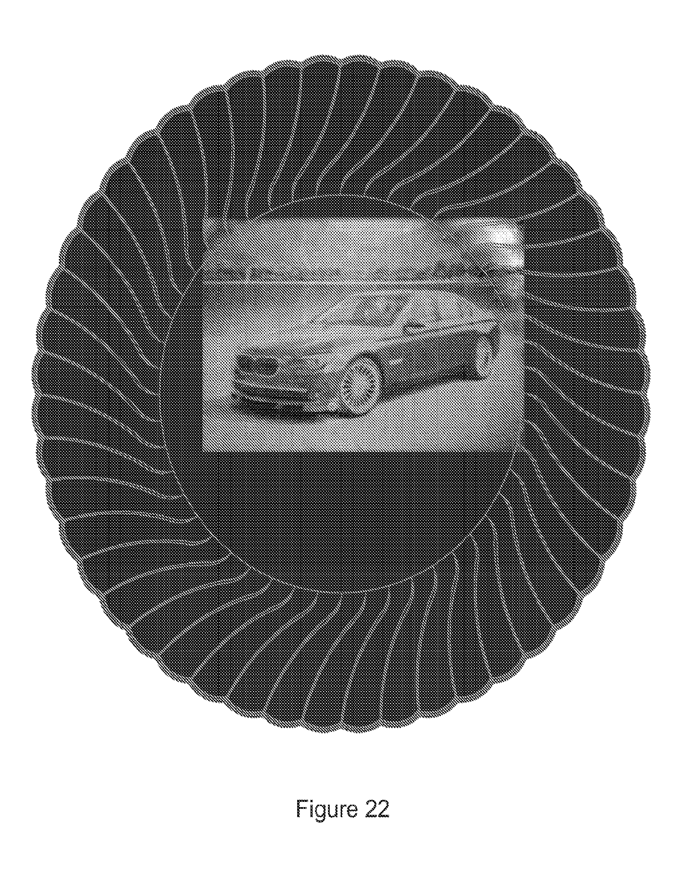

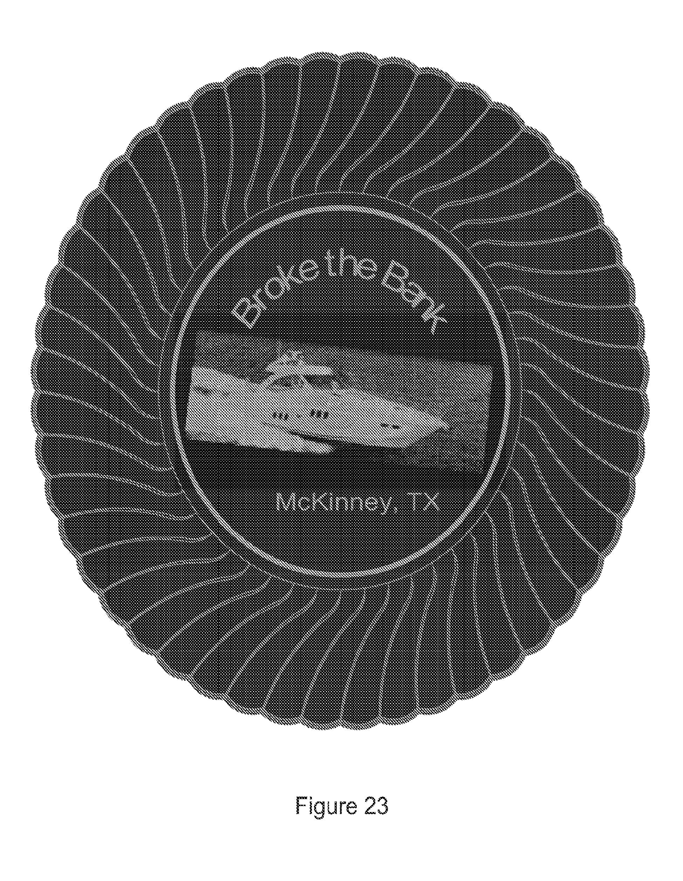

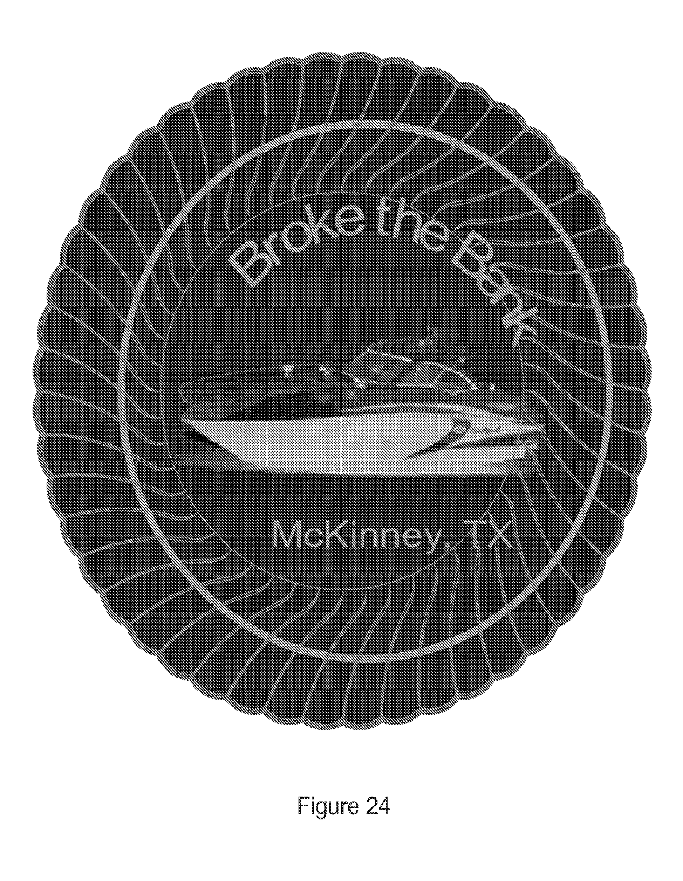

With reference to Figures 2-24, using a 50 Watts, Pulsed Fiber laser operating at a wavelength of about 1062 nm, the inventors have found that a tinted disposable plastic food service article, such as a plastic plate, can be laser marked to emulate the look of a permanentware china plate. For instance, upscale chinaware often includes decorative marking in the form of silver or gold bands or other decorative artwork. The inventors have used a Fiber laser according to the present invention to decorate food service articles such as plates made of a plastic that have been tinted to resemble china, and have produced decorated plastic plates that simulate the appearance of ornately decorated chinaware having gold or silver markings without applying or using any metallic materials, inks, foils, or any other externally applied materials, and without adding any special or secondary pigments to the plastic. See for example Figures 2-11. The markings on the white plates, for example, as shown in Figure 2, offer a silver colored appearance, while the markings on the black plates, for example, as shown in Figure 7, offer a gold colored appearance.

In particular, the marking pattern shown in Figure 2 was obtained using a 50 Watts Pulsed Fiber laser operating at 1062 nanometers with a power setting of 100%, a frequency setting of 50%, a marking speed of about 500 mm/sec, and resolution of 20 dots/mm. A 300 mm lens was used and the focal distance was about 71.12 cm (28 inches). The white plate of Figure 2 is 26.04 cm (10.25 inches) in diameter and was injection molded using polystyrene resin and titanium dioxide colorant. The titanium dioxide loading in the final article was about 3.5%. Marking time for this plate was about 2 seconds and marking exhibited a silver color. It is worth mentioning that laser radiation at these wavelengths and power is harmful to the human eyes and appropriate protective equipment must be worn when working with laser equipment and preferably laser marking should be conducted inside a suitably guarded enclosure that prevents harmful radiation from reaching the operator's eyes.

The marking pattern shown in Figure 7 was obtained using a 50 Watts Pulsed Fiber laser operating at 1062 nanometers with a power setting of 100%, a frequency setting of 50%, a marking speed of about 2,000 mm/sec, and resolution of 50 dots/mm. A 300 mm lens was used and the focal distance was about 71.12 cm (28 inches). The black plate of Figure 7 is 26.04 cm (10.25 inches) in diameter and was injection molded using polystyrene resin and carbon black colorant. The carbon black loading in the final article was about 1% to 1.5%. Marking time for this plate was about 0.9 seconds, and markings exhibited a gold color. It has been generally noticed that black food service articles can be marked at faster speeds or shorter marking times compared to lighter colors, most likely due to higher absorptivity of the carbon black colorant.

The inventors have also discovered that one way to speed up the laser marking process and/or to achieve higher contrast markings is to construct the food service articles from a blend of two or more plastic resins, wherein one of the resin components has a lower melting or vaporization temperature than the other resin components. For example, a blend of about 2% to 5% by weight of linear low density polyethylene in a colored polystyrene material yields shorter marking times than colored polystyrene by itself.

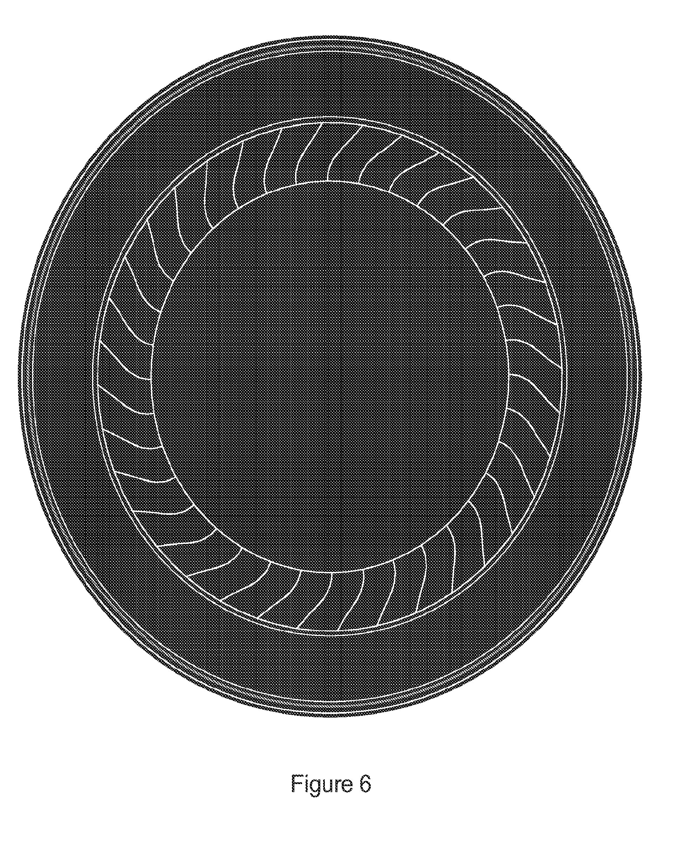

The ability to simulate the appearance of an ornately decorated permanentware china plate without using inks and foils provides several advantages, since - there is no risk of ink-migration into food, there is no risk of arcing or electrical hazards when the plate is used in a microwave unlike a foil-stamped plate, printing equipment changeover and associated clean-up is eliminated, no barrier overcoat is required, and much finer and more intricate patterns can be applied onto the plate surface, as compared to ink printing, without risk of ink-smearing. Note for example that the black articles in Figures 6-11 retain their full sheen, which would be obscured if the same article were decorated by printing and then protected by application of a protective coating over the ink markings. In addition, changeovers from one graphic or pattern to another can be readily accomplished without significant downtime or line-stoppages, so that product personalization and customization for various events and occasions becomes practically feasible and economically viable.

It will be appreciated that in printing or stamping a food-service article, the printed portions of the article have to be fully supported to allow exertion of pressure on the inked surface or master to cause transference of the pattern onto the article, requiring use of dedicated fixtures. Laser decoration of a food service article does not require that the plate be in contact with a physical surface during the decorating process. Any post-molding contamination from ink-carrying templates, stamping dies, or other hardware is thereby avoided. A particular advantage of the non-contact laser decoration method is that the plate surface to be decorated does not have to be substantially flat or maintained in a flat configuration during the decoration process.

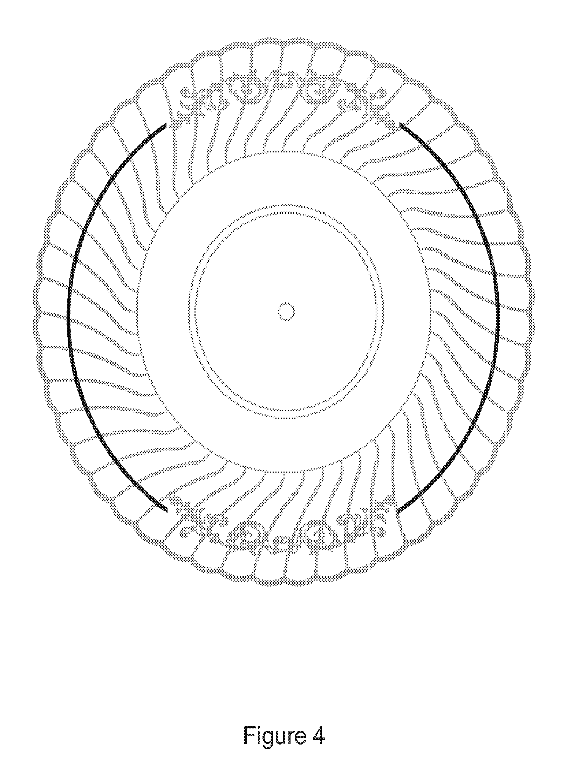

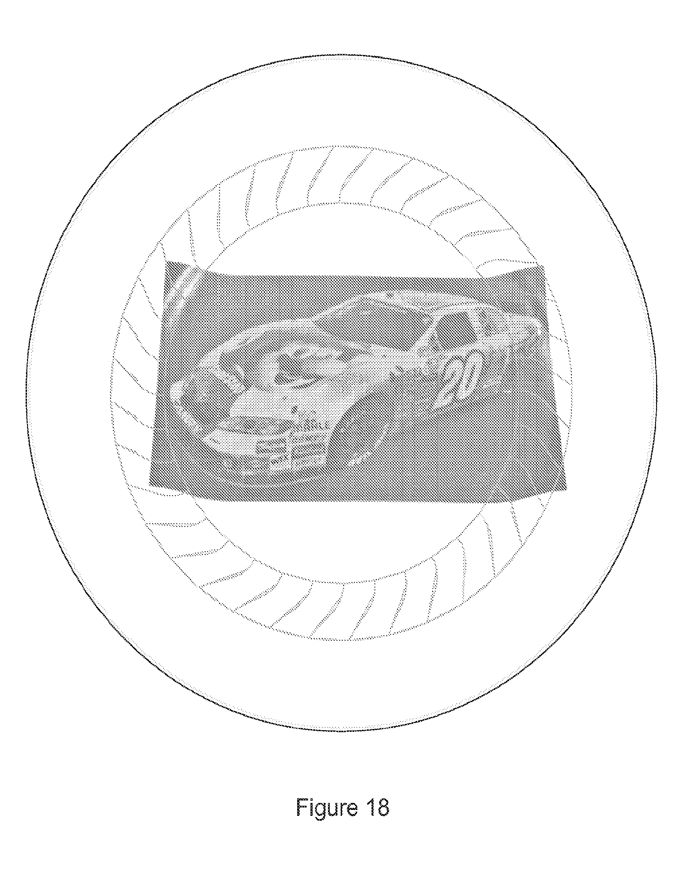

In commercially available laser systems, the incidence of the laser beam on the article surface is controllable in accordance with the desired graphic or pattern using software, whereby the laser beam interacts with the plastic substrate and creates a mark in accordance with the intended artwork. If the surface of the article is shaped, the movements of the beam can be adjusted to compensate, thereby producing an undistorted image of the artwork on the shaped surface. Note for example the application of decorative markings over non-flat surfaces in Figures 4, 5, 9, and 11. Changing the artwork is achieved simply by loading a new file that changes the software commands, so that the pattern can be changed as frequently as every article without significant economic impact. For example, the articles in Figures 18-24 are imprinted with photographs that would typically be of interest to a family, possibly at an event such as a birthday, wedding, or bon-voyage party, and would be produced in relatively small quantities in response to custom orders.

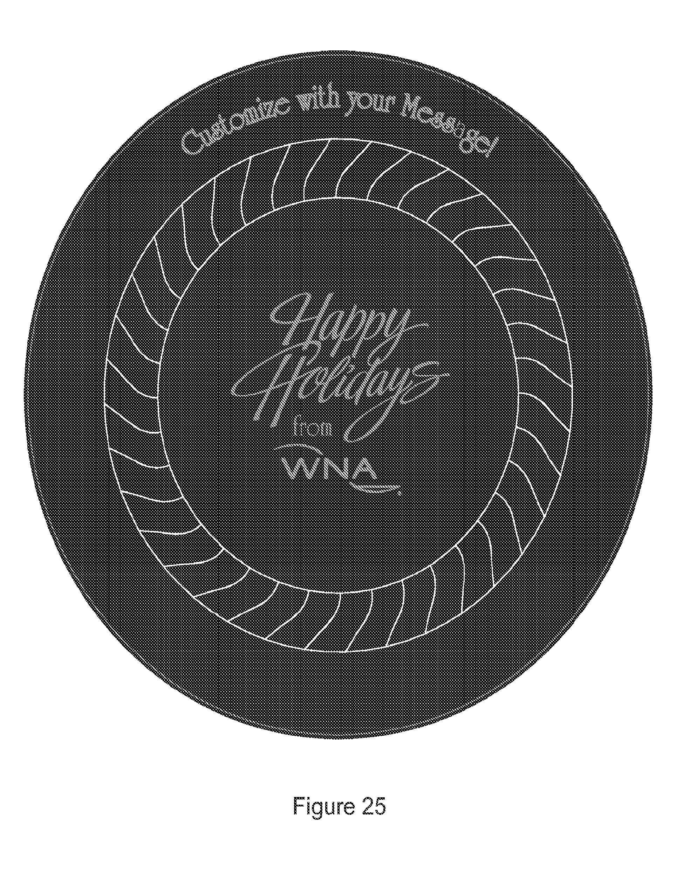

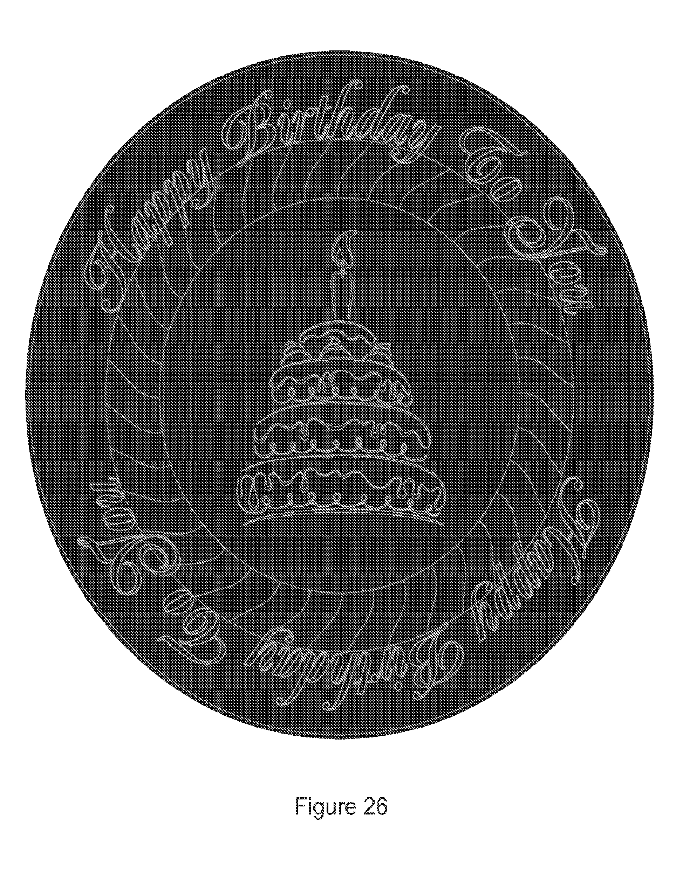

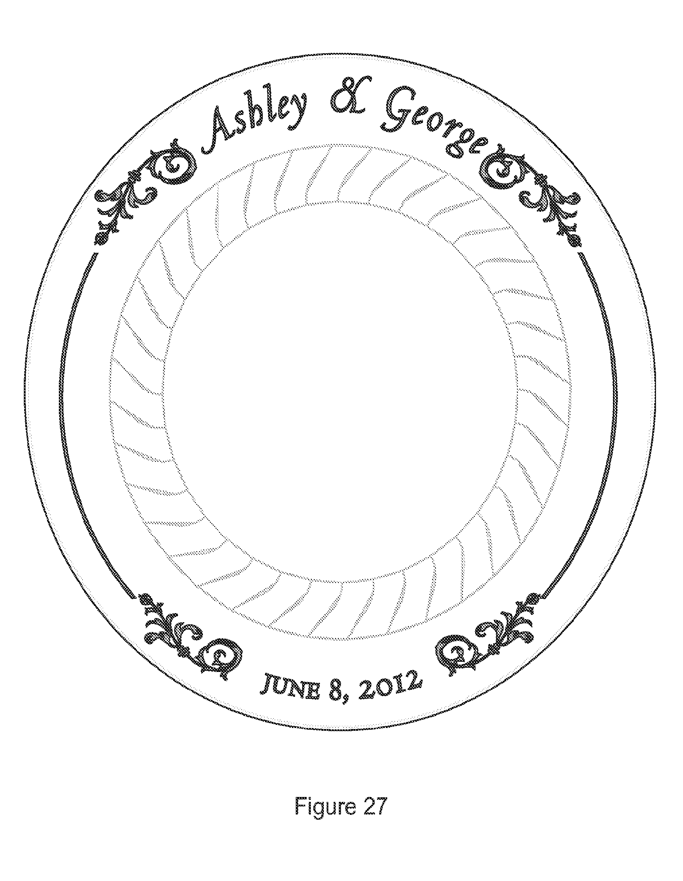

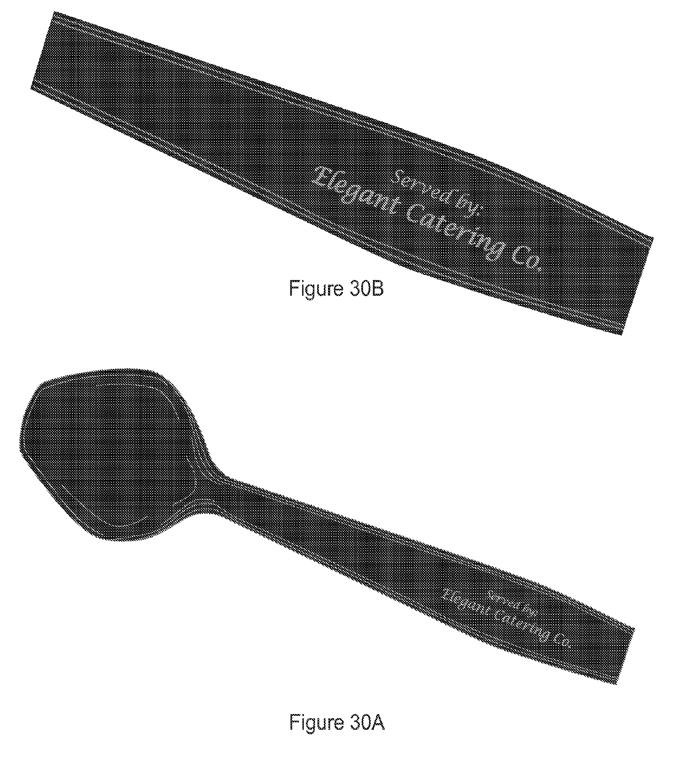

Additional concepts and exemplary embodiments are shown in Figures 25 through 31. Figure 25 shows another exemplary food service plate showing a marketing message, indicating that the article is available in a customized form. Figure 26 shows a food service plate that is targeted for a birthday event. Figure 27 demonstrates the concept of a customized plate for weddings, showing the names of the bride and groom to be.

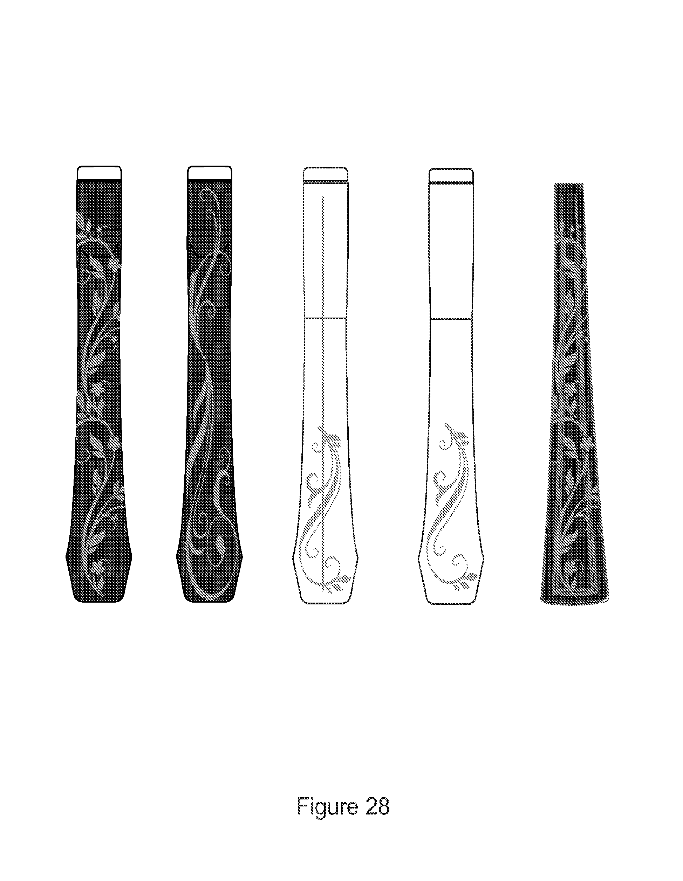

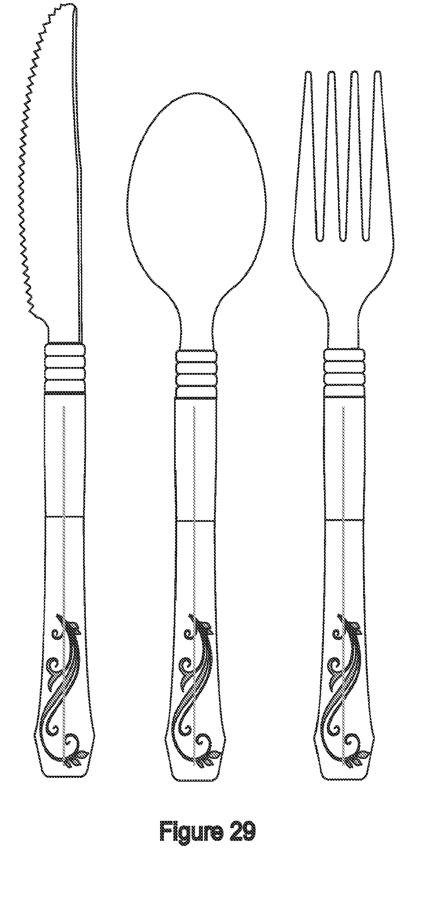

Figure 28 shows exemplary decorations that have been applied by laser marking to a variety of cutlery handles. Hitherto, disposable cutlery has not been available in a decorated form, as it would have been very difficult and cumbersome to decorate cutlery handles with conventional printing processes due to product-handling challenges and the three-dimensional nature of cutlery articles. Any of the exemplary handle designs shown in Figure 28 and many other designs can be imparted to a cutlery line for creating decorated cutlery articles. A cutlery line showing a spoon, a fork and a knife with one of the exemplary decorative designs is shown in Figure 29.

One of the aspects of the laser marking process is that the artwork file needs to be in an appropriate format to serve as suitable input for controlling laser beam deflection via the software program. CAD format files in, for example, DXF format have been found to yield acceptable results, but the choice of file format depends on the type of commercial laser unit and the specifications provided by the manufacturer of the laser marking equipment. It has been the experience of the inventors that typical image formats such as JPEG tend to result in longer marking times and conversion of images to line art and/or a vector format file results in a significant reduction in marking time. One of the advantages of vector format files is that images can be scaled without loss in quality.

Use of a high-intensity laser according to the present invention to irradiate the plastic substrate provides rapid local heating of the plastic substrate as radiation from the laser beam is absorbed by the substrate and converted to thermal energy. Depending on the process parameters, type of plastic, colorant, and design pattern, absorbed radiation may induce decorated markings by causing foaming, carbonizing or charring, discoloration, or chemical changes in the plastic structure. The inventors have found that exposing dinnerware to laser radiation produces a moderate coloration that is suggestive of a metal such as silver, pewter or gold, without actually containing any metal. For example, in Figures 2-24 the white articles include markings that resemble silver, while the black articles include markings that resemble gold. The coloration is highly visible against either a light or a dark background. Of course, too much laser power or longer exposure to laser radiation could vaporize the plastic, resulting in engraving rather than marking.

The 50 Watts Fiber laser unit used for decorating examples shown here yielded marking times for a typical plastic plate in some embodiments of between 0.5 seconds and 5 seconds. At least in some embodiments, the laser marked decoration produces an optically visible but a relatively shallow plastic discoloration effect that is difficult to detect by touch, does not have an unpleasant feel, and does not raise concerns of any substance detaching from the plate surface and migrating into food during use. In other words, the markings can be safely placed in areas which are generally intended for food contact, such as the central area of the plate or a tray, and having sufficient durability to withstand mechanical, thermal and chemical challenges offered by various foods. Plates that have been laser marked according to the present invention have been subjected to dishwasher cycles and have been used with a variety of foods. One of the appeals of the laser marking process is that the markings can be placed in food-contact areas without utilizing a barrier overcoat or a secondary protective layer.

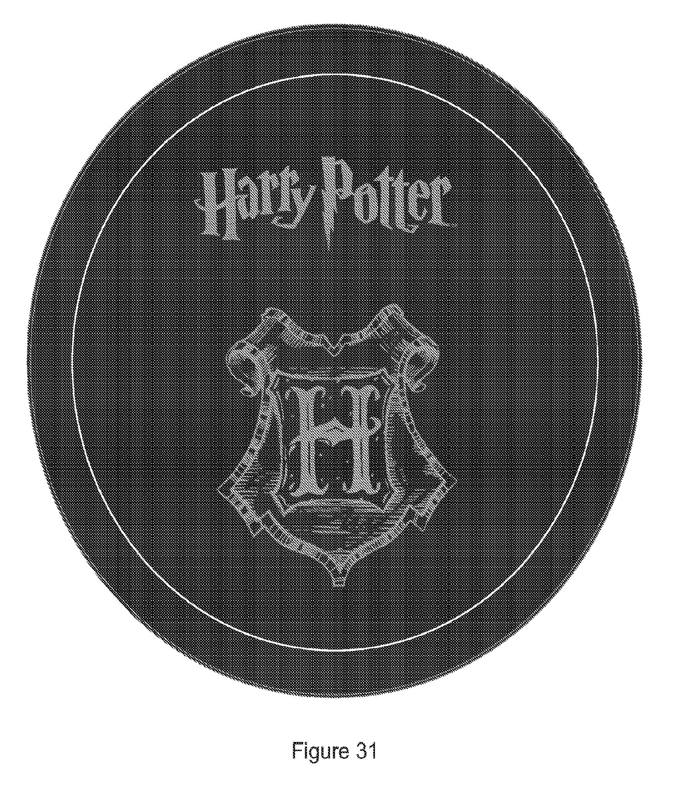

In other exemplary embodiments, sub-surface decorative markings can be achieved by including a transparent or translucent top coat on a colored plastic substrate. Food service articles made via thermoforming often feature a clear top coat for enhancing the sheen or gloss of the underlying colored layer. The transparent top coat allows laser radiation to be transmitted through it, while the underlying colored substrate is at least partially laser-absorbent, or includes a laser absorbing pigment. When such articles are subjected to a laser beam, the underlying layer interacts with the laser beam and undergoes a transformation, while the top layer serves as an intermediary layer. An exemplary embodiment according to the present invention showing a decorative marking on a thermoformed plate with a thin transparent top coat is shown in Figure 31.

The foregoing description of the embodiments of the invention has been presented for the purposes of illustration and description. It is not intended to be exhaustive or to limit the invention to the precise form disclosed. Many modifications and variations are possible in light of this disclosure. It is intended that the scope of the invention be limited not by this detailed description, but rather by the claims appended hereto.

## Claims

1. A decorated plastic food service article, the article comprising:
a food service article made of a colorant-containing thermoplastic resin that undergoes local heating when irradiated with a laser beam; and
a visible marking pattern formed on a surface of the food service article by exposure to said laser beam, causing said local heating and thereby local discoloration of said surface of the food service article;
said visible marking pattern having an appearance on said food service article that simulates application of a metal or of ink, without utilizing metallic coatings or inks on said food service article,
**characterized in that** the food service article is a container, plate, tray, bowl, cup or a cutlery article and said marking pattern is adapted to be placed in food-contact without utilizing a barrier overcoat or a secondary protective layer.

2. The decorated food service article of claim 1, wherein the thermoplastic resin is one of or comprises at least one of general-purpose polystyrene, high-impact polystyrene, polyethylene, polypropylene, polycarbonate, PET, PLA, ABS, SAN, PMMA, and SBC.

3. The decorated food service article according to claim 1, wherein the thermoplastic resin is a blend of a first thermoplastic resin and a second thermoplastic resin, and wherein said first thermoplastic resin has a higher laser absorptivity than said second thermoplastic resin.

4. The decorated food service article according to claim 1, wherein the thermoplastic resin is colored to resemble china dinnerware.

5. The decorated food service article according to claim 1, wherein said visible marking pattern on said surface of the food service article is difficult to detect by touch.

6. The decorated food service article according to claim 1, wherein said visible marking pattern on said surface of the food service article provides at least one of a gold appearance, a silver appearance, a pewter appearance and a white appearance.

7. The decorated food service article according to claim 1, wherein said surface of said food service article is non-planar.

8. The decorated food service article according to claim 1, wherein said visible marking pattern is applied to a portion of the food service article comprising at least one of a flat surface, a non-planar surface, a single curvature surface, a multi-curvature surface, a fluted region, and a scalloped surface.

9. A method for decorating a plastic foodservice article, comprising:
providing a plastic foodservice article made of a colorant-containing thermoplastic resin that is discolored when locally heated;
exposing a surface of the article to a laser beam, which is preferably produced by a YAG laser or by a Fiber laser, the beam having sufficient intensity to cause localized discoloration of the plastic on the surface; and
controlling the location of the beam using a software-controlled beam director, thereby forming a marking pattern on the surface of the food service article that provides the appearance of a permanentware article;
**characterized in that** said marking pattern is adapted to be placed in food-contact without utilizing a barrier overcoat or a secondary protective layer and that said food service article is a container, plate, tray, bowl, cup or a cutlery article.

10. The method according to claim 9, wherein said food service article is injection molded or thermoformed.

11. The method according to claim 9, wherein said laser beam is emitted by a Fiber laser.

12. The method according to claim 9, wherein said laser beam operates at a wavelength between 1060 and 1070 nanometers.

13. The method according to claim 9, wherein said exposure to said laser beam is under 10 seconds.

14. The method according to claim 9, wherein the thermoplastic resin is at least one of or includes at least one of general-purpose polystyrene, high-impact polystyrene, polypropylene, polyethylene, polycarbonate, acrylonitrile-butadiene-styrene (ABS), SAN, PMMA, and styrene-butadiene-copolymer (SBC).

15. The method according to claim 9, wherein the plastic is tinted to resemble china dinnerware.

16. The method according to claim 9, wherein the localized discoloration of plastic on the surface is difficult to detect by touch.

17. The method according to claim 9, wherein the discoloration on the surface provides an appearance similar to a metal.

18. The method according to claim 9, wherein at least a portion of the marking pattern is applied to a region of the food service article that is not flat.

19. The method according to claim 9, wherein the marking pattern can be changed by providing appropriate software instructions to the beam director.

20. The method according to claim 19, further comprising an automated delivery and removal system for automated decoration of a plurality of plastic food service articles.

21. The method according to claim 20, wherein the marking pattern can be changed as frequently as every article during the automated decoration.

22. The method according to claim 9, wherein at least one of a focus of the laser beam and an intensity of the laser beam is controlled by the software.

## Patentansprüche

1. Dekorierter Lebensmittelserviceartikel aus Kunststoff, wobei dieser Artikel umfasst:
einen Lebensmittelserviceartikel aus einem ein Farbmittel enthaltenden thermoplastischen Kunstharz, welches eine lokale Erhitzung durchläuft, wenn es mit einem Laserstrahl bestrahlt wird; und
ein sichtbares Markierungsmuster gebildet auf einer Oberfläche dieses Lebensmittelserviceartikels durch das diesem Laserstrahl Ausgesetztsein, welcher diese lokale Erhitzung verursacht und dabei eine lokale Verfärbung dieser Oberfläche des Lebensmittelserviceartikels;
wobei dieses sichtbare Markierungsmuster ein Erscheinungsbild auf diesem Lebensmittelserviceartikel hat, welches die Anwendung eines Metalls oder einer Tinte simuliert, ohne metallische Beschichtungen oder Tinten auf diesem Lebensmittelserviceartikel zu verwenden,
**dadurch gekennzeichnet, dass** der Lebensmittelserviceartikel ein Behälter, Teller, Tablett, eine Schale, Tasse oder ein Besteckartikel ist und dieses Markierungsmuster angepasst ist, um in Kontakt mit Lebensmittel zu gelangen, ohne einen Barriere-Überzug oder eine zusätzliche Schutzschicht zu verwenden.

2. Der dekorierte Lebensmittelserviceartikel gemäß Anspruch 1, bei dem das thermoplastische Kunstharz eines ist oder wenigstens eines umfasst aus Polystyrol für allgemeine Zwecke, hoch schlagfestes Polystyrol, Polyethylen, Polypropylen, Polycarbonat, PET, PLA, ABS, SAN, PMMA und SBC.

3. Der dekorierte Lebensmittelserviceartikel gemäß Anspruch 1, bei dem das thermoplastische Kunstharz ein Gemisch ist aus einem ersten thermoplastischen Kunstharz und einem zweiten thermoplastischen Kunstharz und bei dem dieses erste thermoplastische Kunstharz ein höheres Laserabsorptionsvermögen hat als dieses zweite thermoplastische Kunstharz.

4. Der dekorierte Lebensmittelserviceartikel gemäß Anspruch 1, bei dem das thermoplastische Kunstharz so koloriert ist, dass es Chinesischem Porzellan ähnelt.

5. Der dekorierte Lebensmittelserviceartikel gemäß Anspruch 1, bei dem dieses sichtbare Markierungsmuster auf dieser Oberfläche des Lebensmittelserviceartikels durch Berührung schwierig wahrzunehmen ist.

6. Der dekorierte Lebensmittelserviceartikel gemäß Anspruch 1, bei dem dieses sichtbare Markierungsmuster auf dieser Oberfläche des Lebensmittelserviceartikels wenigstens eines aus einem goldenen Erscheinungsbild, silbernem Erscheinungsbild zinnartigem Erscheinungsbild und weißem Erscheinungsbild erzeugt.

7. Der dekorierte Lebensmittelserviceartikel gemäß Anspruch 1, bei dem diese Oberfläche dieses Lebensmittelserviceartikels nicht eben ist.

8. Der dekorierte Lebensmittelserviceartikel gemäß Anspruch 1, bei dem dieses sichtbare Markierungsmuster auf einen Teil des Lebensmittelserviceartikels aufgebracht wird, welcher wenigstens eines aus: flache Oberfläche, nicht ebene Oberfläche, einzige gewölbte Oberfläche, mehrfach gewölbte Oberfläche, gerillter Bereich und überbackene Oberfläche umfasst.

9. Ein Verfahren zum Dekorieren eines Lebensmittelserviceartikels aus Kunststoff, umfassend:
das Bereitstellen eines Lebensmittelserviceartikels aus Kunststoff, hergestellt aus einem ein Farbmittel enthaltenden thermoplastischen Kunstharz, welches entfärbt wird, wenn es lokal erhitzt wird;
das Aussetzen einer Oberfläche dieses Artikel gegenüber einem Laserstrahl, welcher vorzugsweise durch einen YAG-Laser erzeugt wird oder einen Faser-Laser, wobei der Strahl ausreichende Intensität hat, um eine lokale Verfärbung des Kunststoffs an der Oberfläche zu verursachen; und
Steuern der Position des Strahls unter Verwendung eines Software-gesteuerten Laserausrichtgeräts, wobei ein Markierungsmuster auf der Oberfläche des Lebensmittelserviceartikels gebildet wird, welches das Erscheinungsbild eines beständigen Artikels erzeugt;
**dadurch gekennzeichnet, dass** dieses Markierungsmuster angepasst ist, um mit Lebensmitteln in Kontakt gebracht zu werden, ohne einen Barriere-Überzug oder eine zusätzliche Schutzschicht zu verwenden und dass dieser Lebensmittelserviceartikel ein Behälter, Teller, Tablett, eine Schale, Tasse oder ein Besteckartikel ist.

10. Verfahren nach Anspruch 9, bei dem dieser Lebensmittelserviceartikel durch Spritzgießen oder Thermoformen hergestellt wird.

11. Verfahren nach Anspruch 9, bei dem dieser Laserstrahl mittels eines Faser-Lasers ausgestrahlt wird.

12. Verfahren nach Anspruch 9, bei dem dieser Laserstrahl bei einer Wellenlänge zwischen 1060 und 1070 Nanometern arbeitet.

13. Verfahren nach Anspruch 9, bei dem dieses Aussetzen gegenüber diesem Laserstrahl weniger als 10 Sekunden beträgt.

14. Verfahren nach Anspruch 9, bei dem das thermoplastische Kunstharz wenigstens eines ist oder wenigstens eines umfasst aus Polystyrol für allgemeine Zwecke, hoch schlagfestes Polystyrol, Polypropylen, Polyethylen, Polycarbonat, AcrylnitrilButadien-Styrol (ABS), SAN, PMMA und Styrol-Butadien-Copolymeres (SBC).

15. Verfahren nach Anspruch 9, bei dem der Kunststoff gefärbt wird, um Chinesischem Porzellan zu ähneln.

16. Verfahren nach Anspruch 9, bei dem die lokale Verfärbung des Kunststoffs an der Oberfläche durch Berührung schwierig wahrzunehmen ist.

17. Verfahren nach Anspruch 9, bei dem die Verfärbung an der Oberfläche ein einem Metall ähnliches Erscheinungsbild erzeugt.

18. Verfahren nach Anspruch 9, bei dem wenigstens ein Teil des Markierungsmusters in einem Bereich des Lebensmittelserviceartikels aufgebracht wird, der nicht flach ist.

19. Verfahren nach Anspruch 9, bei dem das Markierungsmuster verändert werden kann durch geeignete Software-Befehle des Strahlausrichtgeräts.

20. Verfahren nach Anspruch 19, weiterhin umfassend ein System zur automatischen Lieferung und Entfernung für die automatisierte Dekorierung einer Mehrzahl von Lebensmittelserviceartikeln aus Kunststoff.

21. Verfahren nach Anspruch 20, bei dem das Markierungsmuster so oft verändert werden kann wie jeder Artikel während der automatisierten Dekorierung.

22. Verfahren nach Anspruch 9, bei dem wenigstens eines aus dem Fokus des Laserstrahls und der Intensität des Laserstrahls von der Software gesteuert wird.

## Revendications

1. Article de service alimentaire en plastique décoré, l'article comprenant :
un article de service alimentaire se composant d'une résine thermoplastique contenant un colorant qui subit un chauffage local lorsqu'il est irradié avec un faisceau laser ; et
un motif de marquage visible formé sur une surface de l'article de service alimentaire par exposition audit faisceau laser, provoquant ledit chauffage local et ainsi une décoloration locale de ladite surface de l'article de service alimentaire ;
ledit motif de marquage visible ayant une apparence sur ledit article de service alimentaire qui simule l'application d'un métal ou d'une encre, sans utiliser de revêtements métalliques ou d'encres sur ledit article de service alimentaire,
**caractérisé en ce que** l'article de service alimentaire est un récipient, une assiette, un plateau, un bol, une coupe ou un article de coutellerie et ledit motif de marquage est adapté pour être placé en contact avec un aliment sans utiliser de couche de finition barrière ou de couche protectrice secondaire.

2. Article de service alimentaire décoré selon la revendication 1, dans lequel la résine thermoplastique est un des ou comprend au moins un des polystyrène à usage général, polystyrène choc, polyéthylène, polypropylène, polycarbonate, PET, PLA, ABS, SAN, PMMA et SBC.

3. Article de service alimentaire décoré selon la revendication 1, dans lequel la résine thermoplastique est un mélange d'une première résine thermoplastique et d'une seconde résine thermoplastique, et dans lequel ladite première résine thermoplastique a une absorptivité laser supérieure à la seconde résine thermoplastique.

4. Article de service alimentaire décoré selon la revendication 1, dans lequel la résine thermoplastique est colorée pour ressembler à de la vaisselle en porcelaine.

5. Article de service alimentaire décoré selon la revendication 1, dans lequel ledit motif de marquage visible sur ladite surface de l'article de service alimentaire est difficile à détecter au toucher.

6. Article de service alimentaire décoré selon la revendication 1, dans lequel ledit motif de marquage visible sur ladite surface de l'article de service alimentaire offre au moins une apparence parmi une apparence dorée, une apparence argentée, une apparence d'étain et une apparence blanche.

7. Article de service alimentaire décoré selon la revendication 1, dans lequel ladite surface dudit article de service alimentaire est non planaire.

8. Article de service alimentaire décoré selon la revendication 1, dans lequel ledit motif de marquage visible est appliqué sur une partie de l'article de service alimentaire comprenant au moins une surface parmi une surface plate, une surface non planaire, une surface de courbure unique, une surface de multiples courbures, une région cannelée et une surface dentelée.

9. Procédé de décoration d'un article de service alimentaire en plastique consistant à :
fournir un article de service alimentaire en plastique se composant d'une résine thermoplastique contenant un colorant qui est décoloré lorsqu'il est chauffé localement ;
exposer une surface de l'article à un faisceau laser, qui est de préférence produit par un laser YAG, ou par un laser à fibres optiques, le faisceau ayant une intensité suffisante pour provoquer une décoloration localisée du plastique sur la surface ; et
contrôler l'emplacement du faisceau au moyen d'un directeur de faisceau contrôlé par un logiciel, formant ainsi un motif de marquage sur la surface de l'article de service alimentaire qui offre l'apparence d'un article de vaisselle permanente ;
**caractérisé en ce que** l'article de service alimentaire est adapté pour être placé en contact avec un aliment sans utiliser de couche de finition barrière ou de couche protectrice secondaire et **en ce que** ledit article de service alimentaire est un récipient, une assiette, un plateau, un bol, une coupe ou un article de coutellerie.

10. Procédé selon la revendication 9, dans lequel ledit article de service alimentaire est moulé par injection ou thermoformé.

11. Procédé selon la revendication 9, dans lequel ledit faisceau laser est émis par un laser à fibres optiques.

12. Procédé selon la revendication 9, dans lequel ledit faisceau laser fonctionne à une longueur d'onde comprise entre 1060 et 1070 nanomètres.

13. Procédé selon la revendication 9, dans lequel ladite exposition audit faisceau laser est inférieure à 10 secondes.

14. Procédé selon la revendication 9, dans lequel la résine thermoplastique est au moins un des ou comprend au moins un des polystyrène à usage général, polystyrène choc, polypropylène, polyéthylène, polycarbonate, acrylonitrile-butadiène-styrène (ABS), SAN, PMMA et styrène-butadiène-copolymère (SBC).

15. Procédé selon la revendication 9, dans lequel le plastique est tinté pour ressembler à de la vaisselle en porcelaine.

16. Procédé selon la revendication 9, dans lequel la décoloration localisée du plastique sur la surface est difficile à détecter au toucher.

17. Procédé selon la revendication 9, dans lequel la décoloration sur la surface offre une apparence similaire à un métal.

18. Procédé selon la revendication 9, dans lequel au moins une partie du motif de marquage est appliquée sur une zone de l'article de service alimentaire qui n'est pas plate.

19. Procédé selon la revendication 9, dans lequel le motif de marquage peut être modifié en fournissant des instructions logicielles appropriées au directeur de faisceau.

20. Procédé selon la revendication 19, comprenant en outre un système de délivrance et de retrait automatisé pour une décoration automatisée d'une pluralité d'articles de service alimentaires en plastique.

21. Procédé selon la revendication 20, dans lequel le motif de marquage peut être modifié aussi fréquemment qu'à chaque article pendant la décoration automatisée.

22. Procédé selon la revendication 9, dans lequel au moins un d'un foyer du faisceau laser et d'une intensité du faisceau laser est contrôlé par le logiciel.
